# EUROPEAN PATENT APPLICATION

(11) **EP 1 482 500 A1**
(43) Date of publication of application: **01.12.2004**
(21) Application number: 03743559.1
(22) Date of filing: 03.03.2003
(51) Int. Cl.: G11B 20/10, G06F 17/60

(54) **INFORMATION PROCESSING APPARATUS, TRANSMISSION APPARATUS, AND RECORDING MEDIUM**

(30) Priority: 04.03.2002 JP 2002056898
(71) Applicant: MATSUSHITA ELECTRIC INDUSTRIAL CO., LTD., Kadoma-shi, Osaka 571-8501 (JP)
(72) Inventor: IKEDA, Takumi, Kobe-shi, Hyogo 651-0053 (JP)
(74) Representative: Grünecker, Kinkeldey, Stockmair & Schwanhäusser Anwaltssozietät
(86) International application number: PCT/JP2003/002437
(87) International publication number: WO 2003/075274

(57) **Abstract**

An information processing apparatus of the present invention records data on a recording medium. The information processing apparatus has a copyright processing information reception unit for receiving copyright processing information related to copyright processing on the recording medium, and a copyright processing information recording unit for recording the copyright processing information on the recording medium. The information processing apparatus acquires the copyright processing information related to the copyright processing recorded on the recording medium, and performs recording processing so as to determine whether or not to record a content based on the copyright processing information. Thus, a copyright loyalty can be charged to the recording medium, and the copyright is appropriately protected.

## Description

### TECHNICAL FIELD

The present invention relates to an information processing apparatus for recording information for copyright protection on a recording medium, and the recording medium or the like.

### BACKGROUND ART

A broadband infrastructure has been recently developed. With this development, contents have been delivered through a network in addition to a conventional physical medium (a tape, a compact disk (CD), or a digital versatile disk (DVD)), a television broadcast, a radio broadcast, and a movie. When continuous connection environment by a broadband becomes established, it is expected that the amount of digital contents delivered through a network increases and chance that a person produces contents increases. In addition to conventional producing companies of a movie or music and broadcast stations, network connection agencies move into content delivery business.

When digital contents are delivered through a network, the rule for protection of copyright of a content holder against illegal copy is not established. Therefore, a content deliverer generally performs batch copyright processing similarly to the conventional manner.

In the present situation where the deliverer of the digital contents performs right processing of his/her work, it is foreseen that measures are hardly taken. Especially, the Internet presently becomes widespread, so that appropriate copyright protection is difficult in the network delivery of the contents.

### DISCLOSURE OF THE INVENTION

The present invention provides an information processing apparatus for recording data on a recording medium. The information processing apparatus has a copyright processing information reception unit for receiving copyright processing information, namely information related to copyright processing on the recording medium, and a copyright processing information recording unit for recording the copyright processing information on the recording medium.

### BRIEF DESCRIPTION OF THE DRAWINGS

Fig. 1 is a schematic diagram of a recording system in accordance with exemplary embodiment 1 of the present invention.
Fig. 2 is a block diagram of a configuration of a recording apparatus in accordance with exemplary embodiment 1.
Fig. 3 is a flowchart of operations of the recording apparatus in accordance with exemplary embodiment 1.
Fig. 4 is a diagram of an example of copyright processing information recorded on a recording medium in accordance with exemplary embodiment 1.
Fig. 5 is a block diagram of a configuration of a recording apparatus in accordance with exemplary embodiment 2.
Fig. 6 is a flowchart of operations of the recording apparatus in accordance with exemplary embodiment 2.
Fig. 7 shows a display example of an error message panel in accordance with exemplary embodiment 2.
Fig. 8 is a block diagram of a transmitting/receiving system in accordance with exemplary embodiment 3.
Fig. 9 is a diagram of data example of contents and copyright processing information in pairs in accordance with exemplary embodiment 3.
Fig. 10 is a flowchart of operations of a receiver in accordance with exemplary embodiment 3.
Fig. 11 is a diagram of an example of copyright processing information recorded on a recording medium in accordance with exemplary embodiment 3.
Fig. 12 is a block diagram of a configuration of a recording system in accordance with exemplary embodiment 4.
Fig. 13 is a flowchart of operations of the recording apparatus in accordance with exemplary embodiment 4.
Fig. 14 is a flowchart of operations of the recording apparatus in accordance with exemplary embodiment 4.
Fig. 15 shows a display example of a panel in accordance with exemplary embodiment 4.
Fig. 16 is a flowchart of operations of a server apparatus in accordance with exemplary embodiment 4.
Fig. 17 is another flowchart of operations of the recording apparatus in accordance with exemplary embodiment 4.
Fig. 18 is a block diagram of a configuration of an information processing apparatus in accordance with exemplary embodiment 5.
Fig. 19 is a flowchart of operations of the information processing apparatus in accordance with exemplary embodiment 5.
Fig. 20 is a block diagram of a configuration of an information processing apparatus in accordance with exemplary embodiment 6.
Fig. 21 is a flowchart of operations of the information processing apparatus in accordance with exemplary embodiment 6.
Fig. 22 is a diagram showing an example of fee information stored in a fee information storing unit in accordance with exemplary embodiment 6.
Fig. 23 is a diagram of an example of accounting 'information in accordance with exemplary embodiment 6.
Fig. 24 is a diagram of an example of accounting information stored in an accounting information storing unit in accordance with exemplary embodiment 6.
Fig. 25 is a diagram of an example of accounting information as a processing result in accordance with exemplary embodiment 6.
Fig. 26 is a block diagram of an information processing system in accordance with exemplary embodiment 7.
Fig. 27 is a flowchart of operations of an information processing apparatus in accordance with exemplary embodiment 7.
Fig. 28 is a block diagram of a transmitting/receiving system in accordance with exemplary embodiment 8.
Fig. 29 is a block diagram of an information processing system in accordance with exemplary embodiment 9.
Fig. 30 is a flowchart of operations of an information processing apparatus in accordance with exemplary embodiment 9.
Fig. 31 is a flowchart of operations of a transmission apparatus in accordance with exemplary embodiment 9.
Fig. 32 is a flowchart of an input screen of the information processing apparatus in accordance with exemplary embodiment 9.
Fig. 33 is a flowchart of another input screen of the information processing apparatus in accordance with exemplary embodiment 9.
Fig. 34 is a corresponding table between levels and copyright processing information in accordance with exemplary embodiment 9.
Fig. 35 is a diagram of an example of command information in accordance with exemplary embodiment 9.
Fig. 36 is a diagram of an example of an individual certification managing table in accordance with exemplary embodiment 9.
Fig. 37 is a block diagram of a configuration of an information processing system in accordance with exemplary embodiment 10.
Fig. 38 is a flowchart of operations of a transmission apparatus in accordance with exemplary embodiment 10.

### DETAILED DESCRIPTION OF PREFERRED EMBODIMENTS

Recording systems having a recording apparatus of exemplary embodiments are described with reference to drawings. Elements denoted with the' same reference numbers perform similar operations, and the re-descriptions of those elements are omitted.

### (Exemplary embodiment 1)

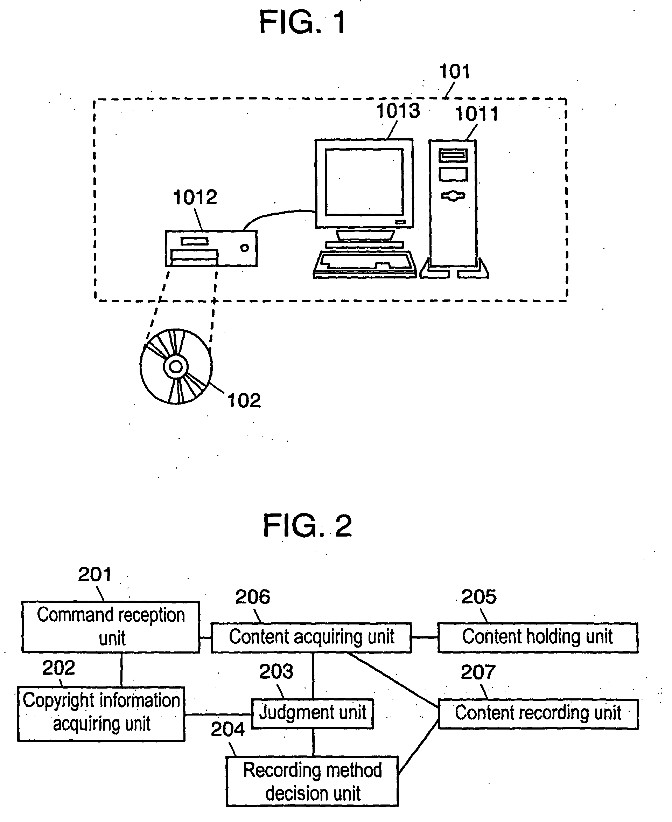

Fig. 1 is a schematic diagram of a recording system having a recording apparatus and a recording medium in accordance with exemplary embodiment 1 of the present invention.

The recording system has recording apparatus 101 and recording medium 102. Recording apparatus 101 records a content on recording medium 102. The content may be called data or information. Here, the content mainly means data of which copyright is protected, for example, video such as a movie, voice data, and music data such as melody.

Recording medium 102 is a medium capable of recording a content. Recording medium 102 may be any medium capable of recording the content, and hence may be a recordable optical disk, a rewritable optical disk, a floppy disk, a semiconductor memory (also including an attachable/detachable memory from the recording apparatus), or a hard disk.

Recording apparatus 101 has computer body 1011, drive 1012 of the recording medium, and display 1013. Computer body 1011 and drive 1012 of the recording medium execute the processing of recording the content on recording medium 102. Display 1013 is required for a user to input a content copy command, but is not absolutely necessary.

Recording apparatus 101 is generally formed of computer body 1011 and drive 1012 of the recording medium, but may be a dedicated machine (for example, an integrated machine) for copying the content to recording medium 102.

Computer body 1011 includes a memory for storing the content, a read only memory (ROM) that stores a program for performing a control of a recording command or the like in drive 1012, and a central processing unit (CPU) for reading the program from the ROM and executing it. Computer body 1011 has a typical configuration, and hence is not shown.

Fig. 2 is a block diagram of a configuration of recording apparatus 102 in the present invention.

Recording apparatus 102 has command reception unit 201, copyright information acquiring unit 202, judgment unit 203, recording method decision unit 204, content holding unit 205, content acquiring unit 206, and content recording unit 207.

Command reception unit 201 receives a recording command having a content identifier for identifying a content and a recording medium identifier for identifying a recording medium. Command reception unit 201 can be formed of driver software or the like for receiving an input from a user via a keyboard or a mouse. In a case that the command is transmitted via the network for example, command reception unit 201 is a modem and its driver software. In a case that the command is transmitted in a broadcast for example, command reception unit 201 is a tuner and its driver software. In a case that the command is transmitted by infrared remote control, command reception unit 201 is an infrared receiver and its driver software.

Copyright information acquiring unit 202 acquires copyright processing information related to copyright processing. Here, the copyright 'processing information is stored on the recording medium identified by the recording medium identifier received by command reception unit 201. The copyright processing information is information indicating that some measures related to the copyright are taken. For example, the copyright processing information indicates that a content charging for copy or output or a chargeable content can be copied, moved, or output (watched or listened). Existence of the copyright processing information on recording medium 102 indicates that the content charging for copy may be copied to the recording medium.

Copyright information acquiring unit 202 is generally formed of software and the CPU. This software is generally stored in the ROM or the like. The acquirement of the copyright processing information includes temporary reading.

Judgment unit 203 determines whether or not copyright information acquiring unit 202 has acquired copyright information. Judgment unit 203 can be generally formed of software and the CPU. This software is generally stored in the ROM or the like.

Recording method decision unit 204 determines a recording method of a content based on a judgment result of judgment unit 203. Recording method decision unit 204 can be generally formed of software and the CPU. This software is generally stored in the ROM or the like.

Content holding unit 205 holds one or more contents. Content holding unit 205 may be any medium capable of storing the content, for example a hard disk, semiconductor memory, or optical disk. Content holding unit 205 may temporarily record a content. The content held by content holding unit 205 may be a content transmitted in a broadcast, a content transmitted by communications, or a content stored on a recording medium such as a compact disk (CD)-ROM. These elements are similar to each other in all embodiments.

Content acquiring unit 206 acquires the content stored in content holding unit 205. Content acquiring unit 206 can be generally formed of software and the CPU. This software is generally stored in the ROM or the like.

Content recording unit 207, based on the determination by recording method decision unit 204, records the content acquired by content acquiring unit 206. Content recording unit 207 can be generally formed of software and the CPU. This software is generally stored in the ROM or the like.

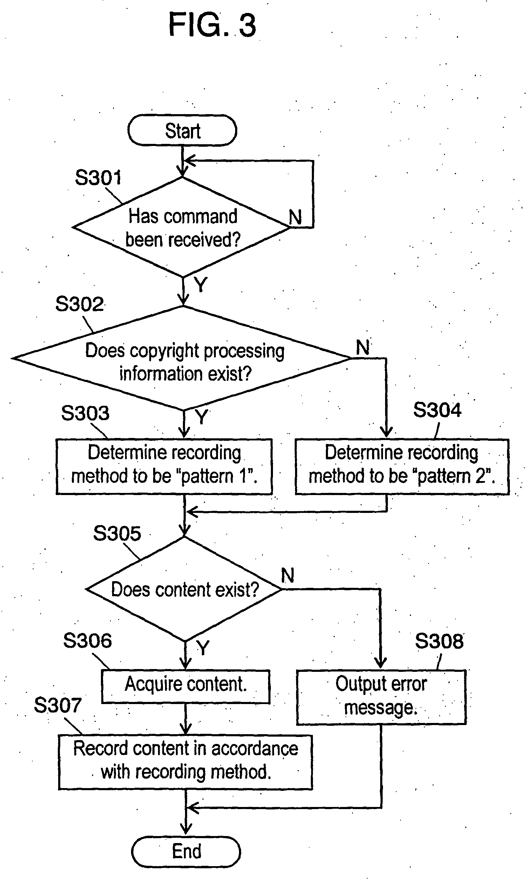

Operations of recording apparatus 101 for copying a content to recording medium 102 are described with reference to the flowchart (Fig. 3).
(Step S301) Recording apparatus 101 determines whether or not command reception unit 201 has received a recording command. If command reception unit 201 has received the command, the process goes to step S302. If command reception unit 201 has not received the command, the process returns to step S301.
(Step S302) Copyright information acquiring unit 202 acquires copyright processing information (always cannot acquire it), and judgment unit 203 determines whether or not the copyright processing information is recorded on recording medium 102. If the information is recorded, the process goes to step S303. If the information is not recorded, the process goes to step S304.
(Step S303) Recording method decision unit 204 determines the recording method to be "pattern 1".
(Step S304) Recording method decision unit 204 determines the recording method to be "pattern 2".
(Step S305) Content acquiring unit 206 determines whether or not the content identified by the content identifier in the command received by command reception unit 201 exists. If the content exists, the process goes to step S306. If the content does not exist, the process jumps to step S308.
(Step S306) Content acquiring unit 206 acquires, from content holding unit 205, the content identified by the content identifier existing in the command received by command reception unit 201.
(Step S307) Content recording unit 307 records the content on the recording medium according to the recording method (pattern 1" or "pattern 2").
(Step S308) An error message indicating nonexistence of the content to be copied is output.

The operations of recording apparatus 101 have been described. Specific operations of recording apparatus 101 are described hereinafter.

It is assumed that a user inputs the command "copy content 1 to recording medium A". This command means that content 1 is copied to recording medium A.

A first operation example in this case is described hereinafter. Recording apparatus 101 determines whether or not recording medium A holds copyright processing information. Recording apparatus 101, on determining that recording medium A holds the information, reads content 1, and copies content 1 to recording medium A. If recording medium A does not hold copyright processing information, recording apparatus 101 does not copy content 1 to recording medium A.

In other words, the recording method "pattern 1" indicates a simple copy. The recording method "pattern 2" indicates that nothing is operated, namely "nop (no operation)".

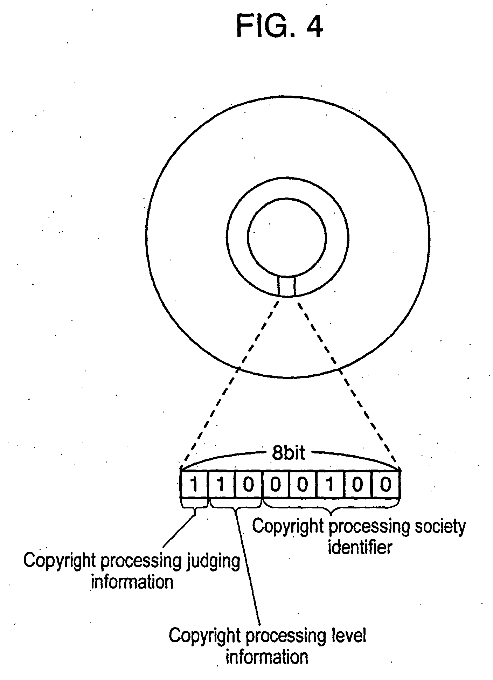

Fig. 4 shows an example of the copyright processing information recorded on recording medium A. Recording medium A is a rewritable optical disk (DVD or the like), for example. The copyright processing information is stored in a region called "R·Information area" in a DVD-R (recordable), for example. Here, "R·Information area" is an example into which the copyright processing information is written, and may be the other region. The region into which the copyright processing information is written is preferably a separate region distinguishable from the region into which the content is written. As an example of the separate region, there is a region such as "R-Information area" prepared for the record managing information required for the recording apparatus.

The copyright processing information is 8-bits of information for example, and the first bit indicates copyright processing judging information. The copyright processing judging information indicates whether or not the copyright processing information is recorded. When the copyright processing judging information is "1", the copyright processing information is recorded on recording medium A. This indicates that copyright processing is applied to recording medium A and the content can be copied. When the copyright processing judging information is "0", the copyright processing information is not recorded on recording medium A. This indicates that copyright processing is not applied to recording medium A and the content cannot be copied.

Next two bits (second bit and third bit) of the copyright processing information indicate copyright processing level information. The copyright processing level information indicates what copyright processing is applied to recording medium A. A content capable of being copied to recording medium A and the copying method depend on the copyright processing level information. The control is performed by recording apparatus 101. The detail of the processing will be described in embodiment 2.

Next five bits (fourth to eighth bits) of the copyright processing information indicate a copyright processing society identifier. This identifier is information used for identifying a group for performing the copyright processing. This group includes a group for performing copyright management or accounting. The copyright processing society identifier indicates a group authorized to copy a content to recording medium A.

The copyright processing society identifier is used as follows, for example. When the identifier is "00001" (indicating a music copyright society), the identifier indicates that a society which manages music copyright has performed the copyright processing, and music data (e.g. WAV file) is recorded on the recording medium based on the copyright processing judging information and the copyright processing level. Data (e.g. movie content) other than the music data is judged not to be copyright-processed and cannot be recorded on the recording medium.

When the copyright processing society identifier is "00010" (indicating a movie copyright society), the identifier indicates that a society which manages movie copyright has performed the copyright processing, and movie data (e.g. motion picture experts group (MPEG) file) is recorded on the recording medium based on the copyright processing judging information and the copyright processing level. Data (e.g. music content) other than the movie data is judged not to be copyright-processed and cannot be recorded on the recording medium.

The following consideration is allowed. When the copyright processing society identifier is "00011", the identifier indicates that authorization from the music copyright society and the movie copyright society is issued, and the movie and the music can be recorded on the recording medium. The last bit of the copyright processing society identifier indicates the existence of the recording authorization by "movie copyright society", and the second last bit indicates the existence of the recording authorization by "music copyright society".

The example of the copyright processing information has been described; however the present invention is not limited to this example. In other words, the copyright processing information may include only the copyright processing judging information, or may include information other than the information discussed above. This condition is satisfied in all embodiments.

The recording of the copyright processing information on the recording medium is considered as follows. The recording may mean that new copyright processing information is recorded when no copyright processing information exists on the recording medium, or mean that, even when copyright processing information exists on the recording medium, copyright processing information is updated, namely overwritten. This condition is satisfied in all embodiments.

When the copyright processing information is recorded on the recording medium, for example, 8 bits of information of Fig 4 may be entirely recorded, or only copyright processing level information of the 8 bits of information may be recorded. In other words, the recording of the copyright processing information on the recording medium means recording of all or part of the copyright processing information. This condition is satisfied in all embodiments.

Next, a second operation example of recording apparatus 101 is described hereinafter. Similarly to the first example, it is assumed that a user inputs the command "copy content 1 to recording medium A". Recording apparatus 101 determines whether or not recording medium A holds copyright processing information. Recording apparatus 101, on determining that recording medium A holds the information, reads content 1 and simply copies the whole of content 1 to recording medium A. Recording apparatus 101, on determining that recording medium A does not hold copyright processing information, reads content 1 and simply copies part of content 1 to recording medium A. In other words, the recording method "pattern 1" indicates copy of all content, and the recording method "pattern 2" indicates copy of part of the content. When the content is a movie or the like including a motion picture and a voice, it is preferable that the part of the content means first 30 seconds of information of the content, for example. In this case, a promotion effect is produced by employing the recording method "pattern 2". Here, the recording method "pattern 2" may be a method of copying arbitrary part of the content. Additionally, the recording method "pattern 2" may be a method of copying part of the content such as a plurality of discrete fields, or a method of copying only the voice of the content including the motion picture and the voice. In the former method, the discrete fields may be acquired from the content at a certain interval or at an arbitrary interval. The recording method "pattern 2" may be a method of extracting and recording data for the promotion when partial data used for the promotion in the content is expressed. The partial data used for the promotion is considered to be expressed by inserting attribute information (tag) on start and finish of the promotion into the content. Here, as the expressing method, any method in which a computer or the like indicates a position of the promotion information in the content may be employed, and the expressing method is not limited to the tag.

A third operation example of recording apparatus 101 is described hereinafter. Similarly to the examples discussed above, it is assumed that a user inputs the command "copy content 1 to recording medium A". Recording apparatus 101 determines whether or not recording medium A holds copyright processing information. Recording apparatus 101, on determining that recording medium A holds the information, reads content 1 and simply copies the whole of content 1 to recording medium A. Recording apparatus 101, on determining that recording medium A does not hold copyright processing information, reads content 1 and encrypts content 1 in a predetermined method. Recording apparatus 101 records encrypted content 1 on recording medium A.

In embodiment 1, the determination whether or not to copy the content to the recording medium depends on whether or not the copyright processing information is recorded on the recording medium to which the content is copied. When the content is copied to the recording medium, the copying method of the content depends on whether or not the copyright processing information is recorded on the recording medium to which the content is copied. In this processing, a mechanism of protecting a copyright holder can be built in the recording medium. Specifically, a manufacturer or seller of the recording medium previously pays part of the selling price of the recording medium to the copyright holder or a copyright protecting group, and the copyright processing information is recorded on the recording medium as an alternative to it. The recording medium previously holding the copyright processing information is communicated to a market. The recording apparatus is authorized to copy or move the content to only the recording medium that previously holds the copyright processing information, thereby allowing appropriate copyright processing.

The recording medium previously holding the copyright processing information is a rewritable optical disk in embodiment 1; however, the recording medium may be any recording medium capable of recording the information, for example a magnetic disk such as a hard disk or a floppy disk, a recordable optical disk, or a portable semiconductor memory.

The input of the content copy command from a user has been described in the command input section; however, the input of the command may be performed by a mouse or a remote controller. The command may be transmitted through a network or broadcast, and the recording apparatus may receive the command and perform the recording processing.

The operations discussed above (especially, operations described in the flowchart of Fig. 3) may be realized by a computer readable program. The program may be delivered in a recorded state on the recording medium such as a CD-ROM, may be delivered by network delivery, or may be delivered in a broadcast.

In embodiment 1, command reception unit 201 is not absolutely necessary, but the recording apparatus may automatically execute the predetermined command.

Content holding unit 205 may hold a plurality of contents or only one content. When content holding unit 205 holds only one content, content acquiring unit 206 acquires the determined content.

The copy of the content is described in embodiment 1; however, similar processing may be performed for moving the content.

The command includes a medium identifier for identifying a medium in embodiment 1; however, the command may have no medium identifier. In this case, the content is copied or moved to the predetermined medium.

### (Exemplary embodiment 2)

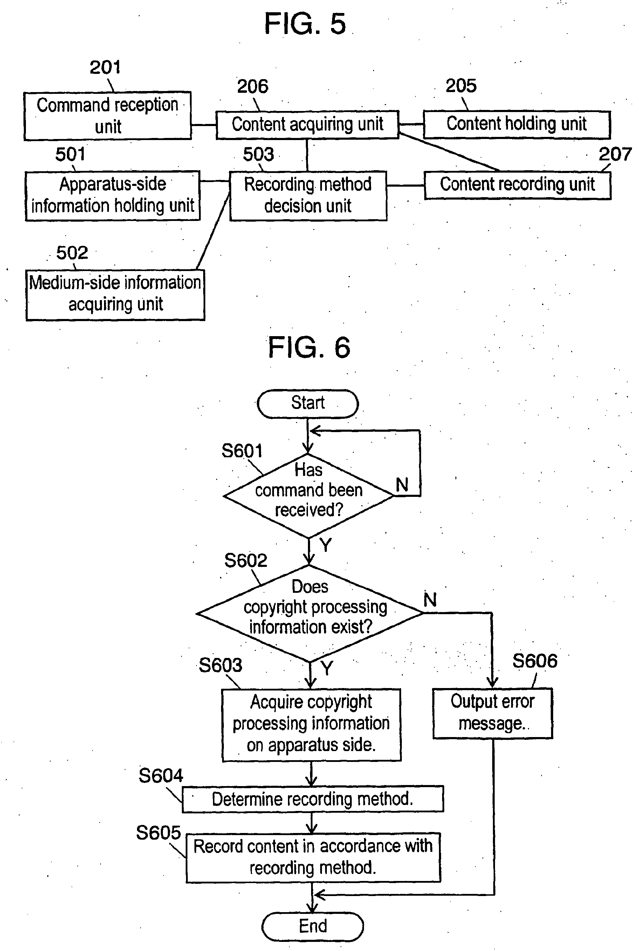

Fig. 5 is a block diagram of a recording apparatus in accordance with exemplary embodiment 2 of the present invention.

The recording apparatus has command reception unit 201, content holding unit 205, content acquiring unit 206, content recording unit 207, apparatus-side information holding unit 501, medium-side information acquiring unit 502, and recording method decision unit 503.

Apparatus-side information holding unit 501 holds copyright processing information on the apparatus side. This copyright processing information corresponds to a copied or moved content. The copyright processing information may be held together with the content in a pair, or only one piece of information may be held. When only one piece of information is held on the recording apparatus, the same information corresponds to all contents held by recording apparatus.

Apparatus-side information holding unit 501 may be any medium capable of storing a content, such as a hard disk, a semiconductor memory, or an optical disk.

Medium-side information acquiring unit 502 acquires copyright processing information recorded on the recording medium, and performs operations similar to those of copyright information acquiring unit 202.

Recording method decision unit 503 determines a recording method of a content based on the copyright processing information held by apparatus-side information holding unit 501 and the copyright processing information acquired by medium-side information acquiring unit 502. Recording method decision unit 503 can be generally formed of software and the CPU. This software is generally stored in the ROM or the like.

Operations of the recording apparatus for copying a content to the recording medium are described with reference to the flowchart (Fig. 6).
(Step S601) The recording apparatus determines whether or not command reception unit 201 has received a recording command. If command reception unit 201 has received the command, the process goes to step S602. If command reception unit 201 has not received the command, the process returns to step S601.
(Step S602) Medium-side information acquiring unit 502 tries to acquire copyright processing information from the recording medium, and determines whether or not it can acquire the copyright processing information. If the information can be acquired, the process goes to step S603. If the information cannot be acquired, the process jumps to step S606. If the copyright processing information can be acquired in this step, the copyright processing information is acquired.
(Step S603) Recording method decision unit 503 acquires copyright processing information on the apparatus side held by apparatus-side information holding unit 501. In this description, it is assumed that there is only one piece of copyright processing information on the apparatus side and the copyright processing information is common to all contents.
(Step S604) Recording method decision unit 503 determines a recording method of the content based on the copyright processing information acquired by medium-side information acquiring unit 502 in step S602 and the copyright processing information on the apparatus side acquired in step S603.
(Step S605) Content recording unit 207 records the content on the recording medium in the content recording method determined in step S604.
(Step S606) An error message indicating that the content cannot be recorded is output to the specified recording medium. The error message is generally previously stored in the recording apparatus, but may be stored into the recording apparatus from the outside by a means such as a network, a broadcast, or a recording medium.

The operations of the recording apparatus of embodiment 2 have been described. Specific operations of the recording apparatus are described hereinafter.

It is assumed that a user inputs the command "copy content 2". This command means that content 2 is copied to the recording medium. The command includes no information for identifying a recording medium, so that the content is always copied or moved to the same recording medium in this example.

A first operation example in this case is described hereinafter. The recording apparatus determines whether or not the recording medium holds copyright processing information. When the recording apparatus determines that the recording medium holds the information, recording method decision unit 503 acquires copyright processing information on the apparatus side held by apparatus-side information holding unit 501. When there is a certain relation between the copyright processing information on the medium side and' the copyright processing information on the apparatus side, recording method decision unit 503 copies content 2 to the recording medium. In this copy, content 2 is simply copied to the recording medium. When there is no certain relation between the copyright processing information on the medium side and that on the apparatus side, the copy of the content is not performed. The certain relation means matching relation between information on both sides, for example. The certain relation may mean the other predetermined relation. It may be determined whether or not there is the certain relation, for example using the copyright processing level information described in embodiment 1. The copyright processing level information specifically indicates which level of content can be stored. In this case, comparing with the copyright processing level information previously recorded on the recording medium is performed, and, when value not more than the value indicated by "copyright processing level information" is copyright processing information (or part of the copyright processing information) corresponding to the content, the copy to the recording medium is authorized. In other words, when "copyright processing level information on the recording medium ≥ content copyright processing information (or part of the copyright processing information)" is established, the recording apparatus records the content on the recording medium.

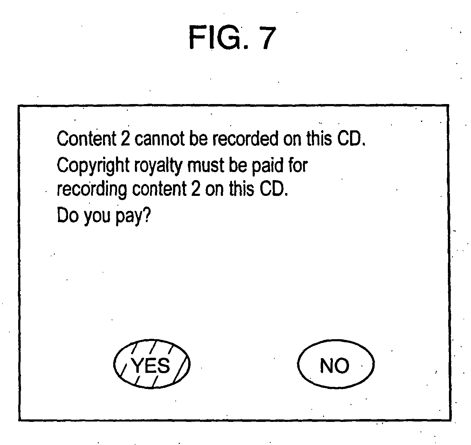

When the recording medium does not hold the copyright processing information, the recording apparatus does not copy content 2 to the recording medium but outputs a panel including the error message shown in Fig. 7. Here, the error message may include only information indicating the error. Detail operations performed after a button in Fig. 7 is pushed down will be described in the other embodiment.

A second operation example in the case discussed above is described hereinafter. The recording apparatus determines whether or not the recording medium holds copyright processing information. When the recording apparatus determines that the recording medium holds the copyright processing information, recording method decision unit 503 acquires copyright processing information on the apparatus side held by apparatus-side information holding unit 501. When there is a certain relation between the copyright processing information on the medium side and the copyright processing information on the apparatus side, recording method decision unit 503 copies content 2 to the recording medium. In this copy, content 2 is simply copied to the recording medium. When there is no certain relation between the copyright processing information on the medium side and that on the apparatus side, part of content 2 is copied to the recording medium. The part of content 2 may take various forms as discussed in embodiment 1.

A third operation example in the case discussed above is described hereinafter. When the recording apparatus determines that the recording medium holds the copyright processing information, and there is 'a certain relation between the copyright processing information on the medium side and the copyright processing information on the apparatus side, the recording apparatus simply copies content 2 to the recording medium. When there is no certain relation between the copyright processing information on the medium side and that on the apparatus side, the recording apparatus encrypts content 2 and copies encrypted content 2 to the recording medium.

In embodiment 2, the normal copy is authorized only when there is the certain relation between the copyright processing information of the recording medium and the copyright processing information held by the recording apparatus, so that the copyright processing can be appropriately performed.

One piece of copyright processing information is held by the recording apparatus and hence the common copyright processing information corresponds to all contents held by the recording apparatus in embodiment 2; however, the recording apparatus may manage copyright processing information every content.

For managing the copyright processing information every content, the recording apparatus may hold the copyright information every content identifier for identifying the content, or may hold the copyright information every kind of the content. The kinds of the contents include music data (e.g. WAV file), text data, motion picture data, multimedia data such as MPEG, groups divided based on the information indicating an owner of the content, groups divided based on the content size, or groups divided based on the content attribute value.

For managing the copyright processing information every content, the recording apparatus determines whether or not to copy a content as a copied object based on the copyright processing information of the content and the copyright processing information of the recording medium, or determines a copying method.

For holding the copyright information every kind of the content, the recording apparatus determines whether or not to copy the content as the copied object based on the copyright processing information of the kind of the content and the copyright processing information of the recording medium, or determines a copying method.

The operations discussed above (especially, operations described in the flowchart of Fig. 6) may be realized by a computer readable program. The program may be delivered in a recorded state on the recording medium such as a CD-ROM, may be delivered by network delivery, or may be delivered in a broadcast.

The copy of the content is described in embodiment 2; however, similar processing may be performed in moving the content.

### (Exemplary embodiment 3)

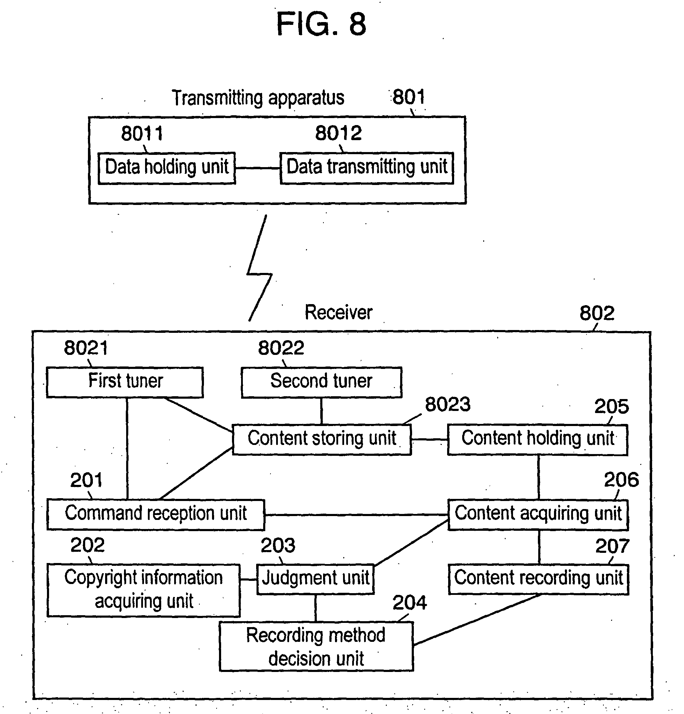

Fig. 8 is a block diagram of a transmitting/receiving system in accordance with exemplary embodiment 3 of the present invention. The transmitting/receiving system has transmission apparatus 801 and receiver 802. Here, the transmission may be one-to-many data transmission such as a broadcast, or may be one-to-one data transmission using a network.

Transmission apparatus 801 has data holding unit 8011 and data transmitting unit 8012. Data holding unit 8011 holds one or more sets of data groups including contents to be transmitted and copyright processing information of the contents in pairs. Data holding unit 8011 is a medium capable of storing data in a hard disk, a CD-ROM, or a semiconductor memory.

Data transmitting unit 8012 transmits the contents held in data holding unit 8011 and the copyright processing information of the contents in pairs. Data transmitting unit 8012 is formed of a modem or a driver, for example. Data transmitting unit 8012 may be formed of an existing data broadcasting means.

Receiver 802 has first tuner 8021, second tuner 8022, content storing unit 8023, command reception unit 201, copyright information acquiring unit 202, judgment unit 203, recording method decision unit 204, content holding unit 205, content acquiring unit 206, and content recording unit 207.

First tuner 8021 and second tuner 8022 receive a broadcast (the transmission apparatus is hereinafter described as a broadcasting apparatus). Received broadcast wave has pairs of contents and the copyright processing information of the contents.

First tuner 8021 is connected to command reception unit 201, and second tuner 8022 is not connected to command reception unit 201. In other words, first tuner 8021 can be remotely controlled by a user, but second tuner 8022 cannot be controlled by the user.

Content storing unit 8023 stores, into content holding unit 205, pairs of contents and the copyright processing information that are received by first tuner 8021 and second tuner 8022.

A copy flow of a content realized by the transmitting/receiving system is described hereinafter.

Firstly, operations of transmission apparatus 801 are described. Data transmitting unit 8012 extracts the pair data of contents and copyright processing information that is held by data holding unit 8011. Data transmitting unit 8012 then transmits the extracted pair data of contents and copyright processing information.

Next, operations of receiver 802 are described. First tuner 8021 or second tuner 8022 receives the pair data of contents and copyright processing information transmitted from transmitter 801. Which of first tuner 8021 and second tuner 8022 receives the data is determined based on a command (a command issued by a user with a remote controller) received by command reception unit 201. Here, which of first tuner 8021 and second tuner 8022 receives the data may be previously determined, or may be fixed. In this case, when user uncontrollable second tuner 8022 is assumed to receive the data, the following effect is produced. In other words, a content of which copyright is asserted is always broadcasted and is always received by the receiver, so that a good content is legally delivered.

Content storing unit 8023 then stores pair data of contents and copyright processing information into content holding unit 205.

The above discussion has shown the operations of storing the pair data of contents and copyright processing information in receiver 802.

Receiver 802 then records the contents on the recording medium in response to a command from the user. An operation example at this time has been described in embodiment 1.

Another example is described hereinafter.

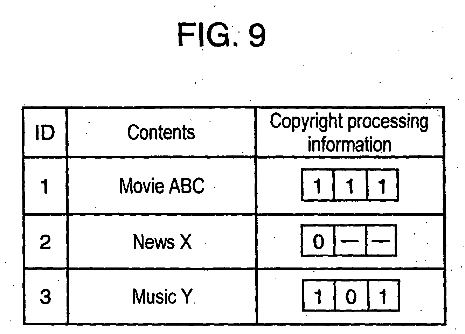

The pair data of contents and copyright processing information shown in Fig. 9 is assumed to be stored in data holding unit 8011 of transmitter 801. The pair data of contents and copyright processing information has corresponding "IDs" used for identifying the data.

The copyright processing information of "ID = 1" is formed of three bits, namely "1", "1", and "1". The first bit "1" indicates that content "movie ABC" is a content of which copyright is asserted. The remaining two bits "11" indicate an asserting level of the copyright. When copyright asserting level in a case such as a copy of the content is high, copyright assertion is strong and the fee for the copy or the like is generally high.

Content "news X" of "ID = 2" corresponds to the copyright processing information of which first bit is "0", so that the copyright is not asserted (the copy is charge free and can be performed freely).

The copyright of content "music Y" of "ID = 3" is asserted, and the asserting level thereof is "01". In other words, the copyright asserting level of content "music Y" is lower than that of content "movie ABC", and hence content "music Y" can be generally copied at a low price.

The three contents and the copyright processing information are assumed to be transmitted and stored in content holding unit 205 of the receiver.

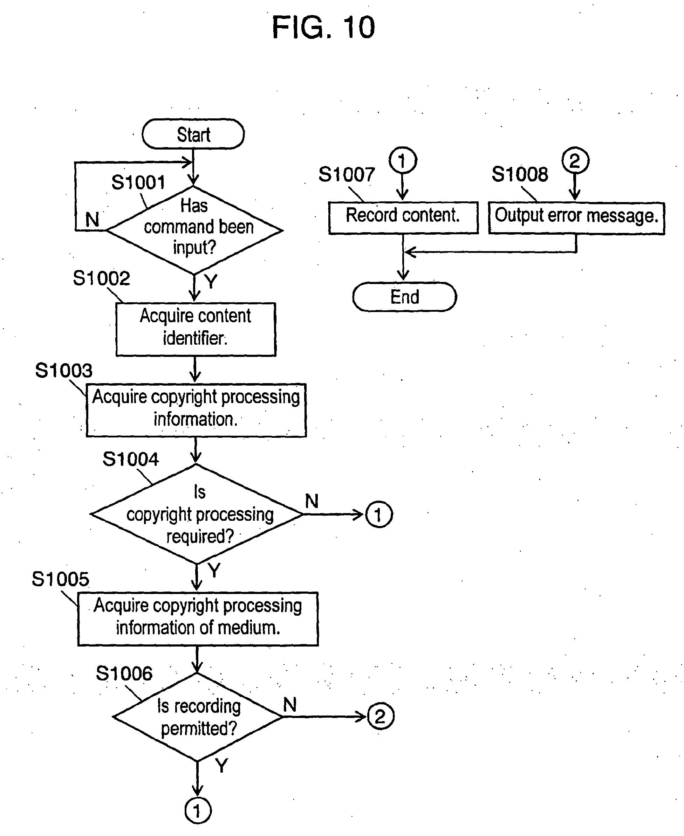

Operations of recording the contents of receiver 802 on the recording medium are described with reference to the flowchart of Fig. 10.
(Step S1001) It is determined whether or not command reception unit 201 has received an input of a content recording command. If command reception unit 201 has received the command, the process goes to' step S1002. If command reception unit 201 has not received the command, the process returns to step S1001. The recording command is "copy content identifier to recording medium identifier" or the like, and includes the content identifier.
(Step S1002) Content acquiring unit 205 acquires the content identifier included in the command.
(Step S1003) Content acquiring unit 205 acquires copyright processing information corresponding to the content identifier from content holding unit 205.
(Step S1004) Content recording unit 207 determines whether or not a content identified by the content identifier requires copyright processing based on copyright processing propriety information. Here, the copyright processing propriety information is included in the copyright processing information acquired in step S1003 and indicates whether or not the copyright processing is performed. If the copyright processing is required, the process goes to step S1005. If the copyright processing is not required, the process jumps to step S1007.
(Step S1005) Content recording unit 207 acquires the copyright processing information of the recording medium identified by the recording medium identifier included in the command. The copyright processing information is previously recorded on the medium, and, for example, includes information indicating whether or not the medium has been copyright-processed and information indicating a level of the copyright processing.
(Step S1006) Content recording unit 207 determines whether or not the content may be recorded based on the copyright processing information acquired in step S1003 and the copyright processing information of the recording medium acquired in step S1005. If the content may be recorded, the process goes to step S1007. If the content is determined not to be recorded, the process jumps to step S1008.
(Step S1007) Content recording unit 207 records the content on the recording medium.
(Step S1008) Content recording unit 207 outputs a previously stored error message.

The general operations of recording a content in receiver 802 have been described.

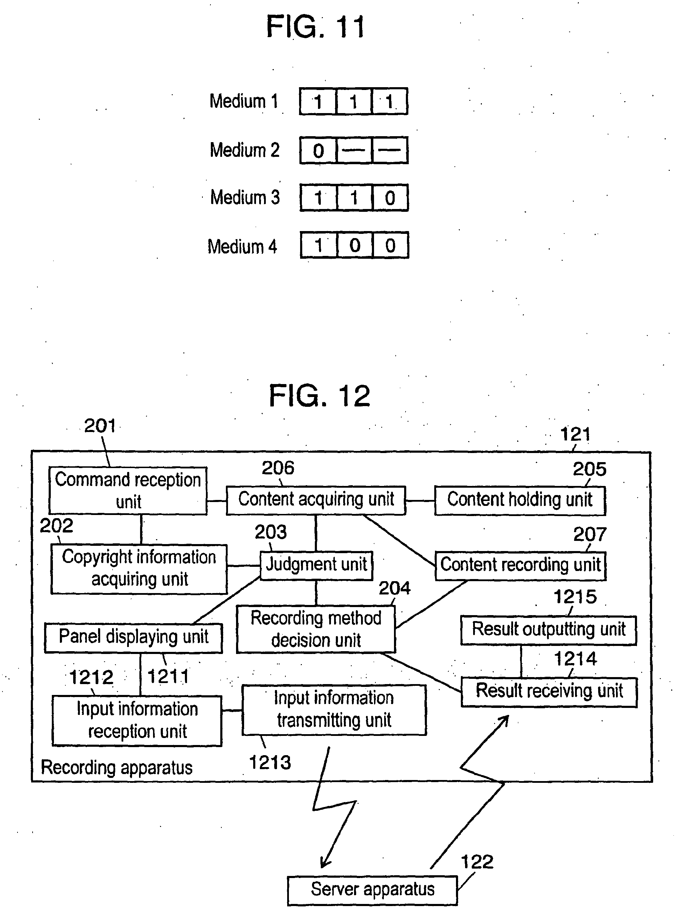

Next, specific operations are described. Operations of copying the content shown in Fig. 10 to various recording media having copyright processing information shown in Fig. 11 are described.

The copyright processing information shown in Fig. 11 is formed of three bits. The first bit indicates whether or not the copyright processing content is performed. When the first bit is "1", the copyright processing is performed and a content of which some copyright is asserted can be stored. When the first bit is "0", the copyright processing is not performed and only a content of which copyright is not asserted can be stored.

The next two bits indicate a level of the copyright processing, and it is set that the higher the level is, the more strongly copyright processing is performed, for example (it may set that the lower the level is, the more strongly copyright processing is performed).

The strong copyright processing means that a manufacturer or a seller pays high cost to a copyright group or the like and a content of which copyright is strongly asserted can be also stored.

Fig. 11 considers four recording media.

Medium 1, medium 3, and medium 4 are copyright-processed, because the first bit is "1" in each medium. Medium 2 is not copyright-processed. Therefore, a content of which copyright is asserted can be copied only to medium 1, medium 3, and medium 4. While, only a content such as "news X" of which copyright is not asserted can be copied to medium 2.

The level of copyright processing is "11"in medium 1, "10" in medium 3, or "00" in medium 4.

Now, it is assumed that a content can be recorded only when the certain relation "copyright processing level of recording medium ≥ content copyright assertion level" is established.

In this case, "movie ABC" can be copied only to medium 1, and "music Y" can be copied to medium 1 and medium 3. Since medium 4 has low copyright processing level, medium 4 cannot store a content having high copyright assertion level.

In embodiment 3, as discussed above, the copyright processing of contents can be appropriately performed. Here, the contents have been transmitted (including "broadcasted") by the transmission apparatus for transmitting pairs of contents and copyright processing information and by the transmitting system having the receiver for receiving and recording them on a recording medium.

Especially, considering copyright assertion level of the content and the copyright processing level of the recording medium allows careful copyright processing.

In the case discussed above, it has been assumed that a content can be recorded only when the certain relation "copyright processing level of recording medium ≥ content copyright assertion level" is established. However, it may be assumed that a content can be recorded only when "copyright processing level of recording medium = content copyright assertion level" is established. Additionally, the certain relation may be varied.

The operations of the transmission apparatus or receiver described in embodiment 3 may be realized by a computer readable program. The program may be delivered in a recorded state on the recording medium such as a CD-ROM, may be delivered by network delivery, or may be delivered in a broadcast.

The copy of the content has been described in embodiment 3; however, similar processing may be performed in moving the content.

### (Exemplary embodiment 4)

Operations of copyright processing using a network after the display of the panel of Fig. 7 are described hereinafter.

Fig. 12 is a block diagram of a configuration of a recording system for performing the copyright processing.

The recording system has recording apparatus 121 and server apparatus 122.

Recording apparatus 121 records a content. Server apparatus 122 receives information for the copyright processing from recording apparatus 121, performs the copyright processing, and returns the result of the processing to recording apparatus 121. The copyright processing means accounting processing or the like for permitting copy of a content of which copyright is asserted.

Recording apparatus 121 has command reception unit 201, copyright information acquiring unit 202, judgment unit 203, recording method decision unit 204, content holding unit 205, content acquiring unit 206, content recording unit 207, panel displaying unit 1211, input information reception unit 1212, input information transmitting unit 1213, result receiving unit 1214, and result outputting unit 1215.

Panel displaying unit 1211 displays a previously stored panel for the copyright processing when the judgment result of judgment unit 203 indicates nonexistence of copyright processing information. Panel displaying unit 1211 is generally formed of software and a CPU. The information for creating the panel is written in hyper text markup language (HTML) for example, and recorded on a recording medium such as a hard disk included in the recording apparatus.

Input information reception unit 1212 receives an input of input information required for the copyright processing when the judgment result of judgment unit 203 indicates nonexistence of copyright processing information. Input information reception unit 1212 is generally formed of software (e.g. a keyboard driver or a mouse driver) and the CPU.

Input information transmitting unit 1213 transmits the input information received by input information reception unit 1212. Input information transmitting unit 1213 is formed of a modem and driver software thereof, for example. The transmission is preferably the network transmission, but may be data transmission by a broadcast such as a cable television (CATV) or a satellite.

Result receiving unit 1214 receives the result of the copyright processing by server apparatus 122. Result receiving unit 1214 generally receives the result through a network, but may receive the result in a broadcast. Result receiving unit 1214 is formed of a modem and driver software or the like thereof.

Result outputting unit 1215 outputs the result received by result receiving unit 1214. Result outputting unit 1215 generally includes a display and can be formed of a display and driver software or the like thereof. The output includes printing or transmission. The transmission means transmission of the result to the other apparatus.

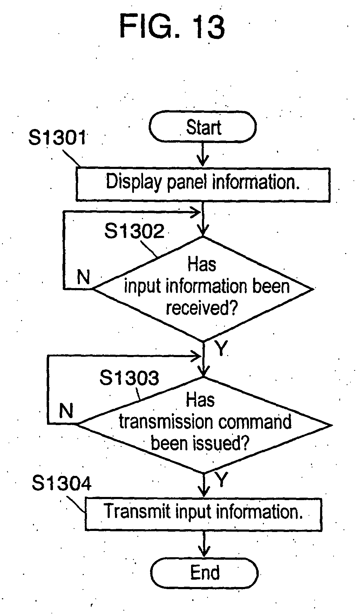

Operations of recording apparatus 121 are described using the flowchart of Fig. 13. The flowchart of Fig. 13 shows processing performed after judgment unit 203 judges that recording cannot be permitted. The judgment processing by judgment unit 203 about whether or not recording is permitted has been described.
(Step S1301) Panel displaying unit 1211 encourages an input of the input information and displays a panel for encouraging transmission of the input information. An example of detail processing of displaying the panel is as follows. Panel displaying unit 1211 reads out panel information (written in HTML, for example) used for creating the panel, interprets and executes the panel information, creates a panel, and outputs the panel to the display.
(Step S1302) Recording apparatus 121 determines whether or not input information reception unit 1212 has received the input information. If input information reception unit 1212 has received the input information, the process goes to step S1303. If input information reception unit 1212 has not received the input information, the process returns to step S1302.
(Step S1303) Recording apparatus 121 determines whether or not input information reception unit 1212 has received a transmission command. If input information reception unit 1212 has received the transmission command, the process goes to step S1304. If input information reception unit 1212 has not received the transmission command, the process returns to step S1303. The transmission command is issued by pushing down a transmission button.
(Step S1304) Input information transmitting unit 1213 transmits the input information.

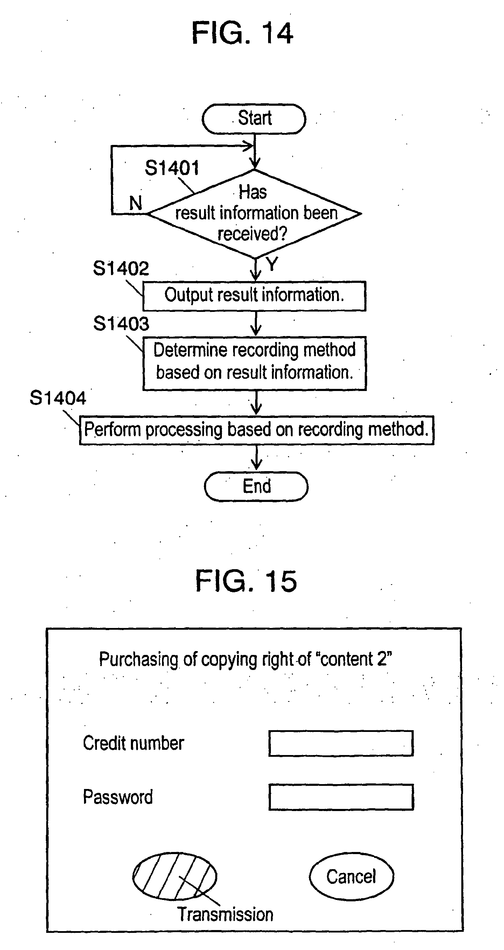

The processing performed until recording apparatus 121 transmits the input information has been described. Operations where recording apparatus 121 receives a processing result of the input information from server apparatus 122 and processes the result are then described with reference to the flowchart of Fig. 14.
(Step S1401) Recording apparatus 121 determines whether or not result receiving unit 1214 has received result information indicating the processing result of the input information from server apparatus 121. If result receiving unit 1214 has received the result information, the process goes to step S1402. If result receiving unit 1214 has not received the result information, the process returns to step S1401.
(Step S1402) Result outputting unit 1215 outputs the result information. The result information is generally output to the display.
(Step S1403) Recording method decision unit 204 determines a recording method based on the result information.
(Step S1404) Content recording unit 207 performs recording processing based on the recording method determined in step S1403. This recording processing includes "nop", namely no operation.

The operations of the copyright processing and content recording of recording apparatus 121 and server apparatus 122 have been described.

Specific operations are hereinafter described.

When button "YES" is pushed down in a displayed state of the panel of Fig. 7, the panel shown in Fig. 15 is displayed. When a user inputs appropriate data into the "credit number" field and "password" field in the panel of Fig. 15, the user can purchase the right to copy content 2 by online shopping. Based on these operations, the recording apparatus records content 2 on the recording medium.

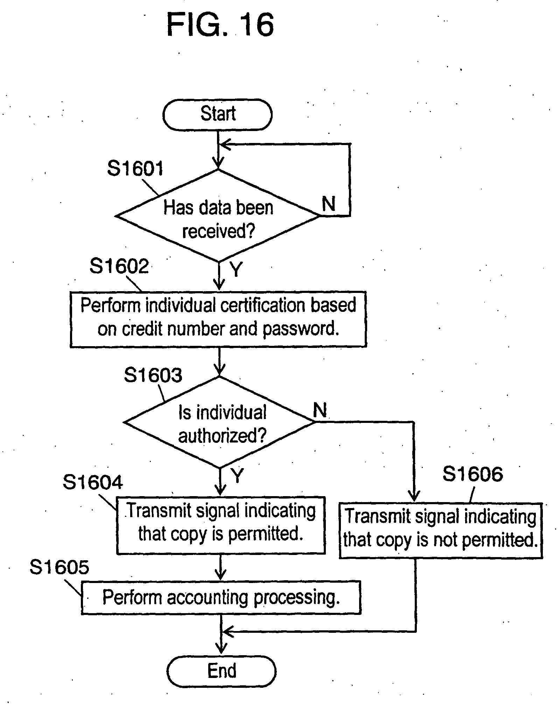

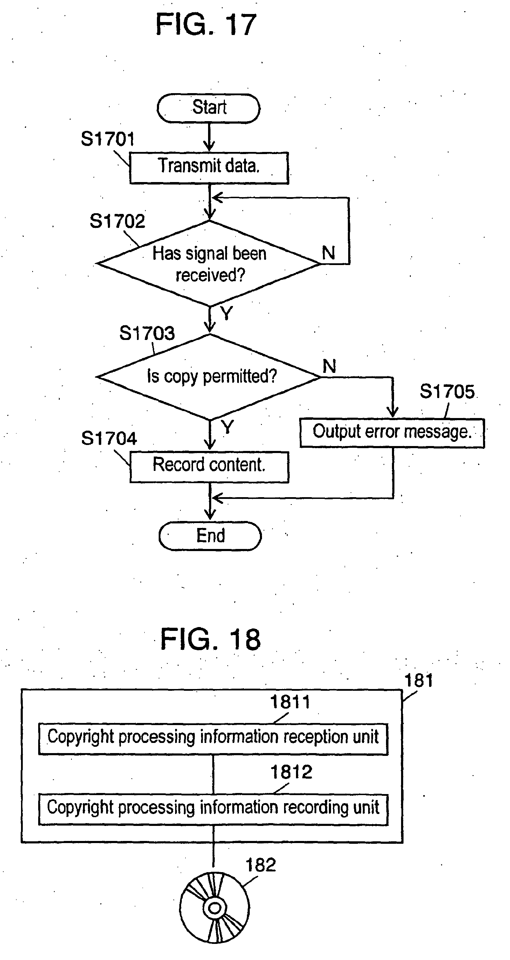

The operations discussed above are specifically realized by communications between the recording apparatus and the server apparatus. The server apparatus performs the operations shown in Fig. 16, and the recording apparatus communicating with the server apparatus performs the operations shown in Fig. 17.
(Step S1601) The server apparatus determines whether or not data including a credit number and a password has been received. If the data has been received, the process goes to step S1602. If the data has not been received, the process returns to step S1601.
(Step S1602) The server apparatus performs individual certification by adapting the received data to previously managed individual information.
(Step S1603) The server apparatus determines based on the received data whether or not the user who has transmitted data is a registered and authorized person. If the user is authorized, the process goes to step S1604. If the user is not authorized, the process goes to step S1605.
(Step S1604) The server apparatus transmits a signal indicating that the copy is permitted to the recording apparatus.
(Step S1605) The server apparatus performs accounting processing using the credit number and the like. This accounting processing is normal accounting processing employing a credit card. As a result of the accounting processing, a correct fee is paid to a copyright holder or a copyright managing group.
(Step S1606) The server apparatus transmits a signal indicating that the copy is not permitted to the recording apparatus.

The flowchart (Fig. 17) illustrating the operations of the recording apparatus is described hereinafter.
(Step S1701) The recording apparatus transmits the data including the credit number and the password. The data transmission is realized by pushing down the transmission button.
(Step S1702) The recording apparatus determines whether or not a signal has been received from the server apparatus. If the signal has been received, the process goes to step S1703. If the signal has not been received, the process returns to step S1702.
(Step S1703) The recording apparatus determines whether or not the received signal indicates that the copy is permitted. If the signal indicates that the copy is permitted, the process goes to step S1704. If the signal does not indicate that the copy is permitted, the process goes to step S1705.
(Step S1704) The recording apparatus records a content on the recording medium.
(Step S1705) The recording apparatus outputs an error message indicating that the credit number or the password is incorrect.

In embodiment 4, the processing performed when the copyright processing is insufficient has been described. In this case, the copyright processing is instantly performed using a network or the like, and the content is recorded on the recording medium as it is (this is called confirming processing).

In embodiment 4, the recording method has been determined based on the result information (step S1403 in Fig. 14). The result information is generated by server apparatus 122 based on the input information, so that determination based on the result information is equivalent to determination based on the input information. In other words, the recording method is determined based on the result information and also based on the input information, though there is difference in determination method, namely direct or indirect. Recording apparatus 121 may determine the recording method directly based on the input information without waiting for the result information from server apparatus 122. In this case, the content recording processing can be started without waiting for the transmission of the result information from server apparatus 122, so that the content recording can be advantageously performed at a high speed.

In embodiment 4, panel displaying unit 1211 is not absolutely necessary. Even when the panel is not displayed, it is simply required that the input information is fed and the fed input information is transmitted. The receiving (a result receiving unit) or the output (a result outputting unit) of the result information is not absolutely necessary. It is simply required that the recording apparatus determines the recording method based on the input information.

In embodiment 4, an example where the confirming processing is applied to embodiment 1 has been described; however the similar confirming processing can be applied to embodiments 2 and 3. In other words, in embodiments 2 and 3, in a case that the content cannot be recorded as it is, performing the confirming processing allows the entire content to be recorded or the content recordable range to enlarge. Here, this case includes a case that the content cannot be recorded at all, the content can be recorded only partially, or the content is encrypted and recorded. The enlargement of the content recordable range indicates that the content that could not be recorded at all becomes allowed to be recorded partially.

The confirming processing therefore allows the recording apparatus configuration discussed below.

A recording apparatus for recording a content on a recording medium has the following elements:
a judgment unit for determining whether or not copyright processing information exists on the recording medium;
a content recording unit for recording the content on the recording medium only when existence of the copyright processing information is determined by the judgment unit;
an input information reception unit for receiving an input of input information required for the copyright processing when nonexistence of the copyright processing information is determined by the judgment unit; and
an input information transmitting unit for transmitting the input information received by the input information reception unit.

A recording apparatus for recording a content on a recording medium has the following elements:
an apparatus-side information holding unit for holding copyright processing information;
a medium-side information acquiring unit for acquiring copyright processing information recorded on the recording medium;
a record judgment unit for determining whether or not to record a content based on the copyright processing information held by the apparatus-side information holding unit and the copyright processing information acquired by the medium-side information acquiring unit;
a content recording unit for recording the content on the recording medium only when recording is determined by the record judgment unit;
an input information reception unit for receiving an input of input information required for the copyright processing when no-recording is determined by the record judgment unit; and
an input information transmitting unit for transmitting the input information received by the input information reception unit.

A recording apparatus for recording a content on a recording medium has the following elements:
a judgment unit for determining whether or not copyright processing information exists on the recording medium;
a recording method decision unit for determining a content recording method based on a determination result by the judgment unit;
a content recording unit for recording the content on the recording medium based on the determination by the recording method decision unit;
an input information reception unit for receiving an input of input information required for the copyright processing when nonexistence of the copyright processing information is determined by the judgment unit; and
an input information transmitting unit for transmitting the input information received by the input information reception unit.
The recording method decision unit determines the recording method based on the input information transmitted by the input information transmitting unit.

The operations discussed above (especially, operations 'described by flowcharts in Fig. 13, Fig. 14, Fig. 16, and Fig. 17) may be realized by computer readable programs. The programs may be distributed in a recorded state on a recording medium such as a CD-ROM, by network delivery, or in a broadcast.

### (Exemplary embodiment 5)

Fig. 18 is a block diagram of a configuration of information processing apparatus 181 in accordance with exemplary embodiment 5 of the present invention.

Information processing apparatus 181 has copyright processing information reception unit 1811 and copyright processing information recording unit 1812.

Copyright processing information reception unit 1811 receives copyright processing information. This "reception" means the following processings:
receiving of an input of copyright information;
processing of reading out copyright information on a memory; and
processing of receiving copyright processing information from the outside through a medium such as communications or a broadcast.
Copyright processing information reception unit 1811 is formed of a' keyboard and its driver software, for example. Copyright processing information reception unit 1811 is also formed of a modem and its driver software, or a tuner and its driver software.

Copyright processing information recording unit 1812 records copyright processing information received by copyright processing information reception unit 1811 on recording medium 182. Recording medium 182 may be any recording medium capable of recording the information, for example an optical disk such as CD-ROM, a magnetic disk such as a hard disk, or a semiconductor memory.

Copyright processing information recording unit 1812 is formed of software for recording the information and hardware or the like for recording it, for example. Copyright processing information recording unit 1812 may include no hardware for recording the information but only software having a recording command. Copyright processing information recording unit 1812 preferably records the copyright processing information in a predetermined region on the recording medium. The predetermined region is a region separate from a region for recording contents, for example. The region is, for example, "R-Information area" in a DVD-R prepared for record management information.

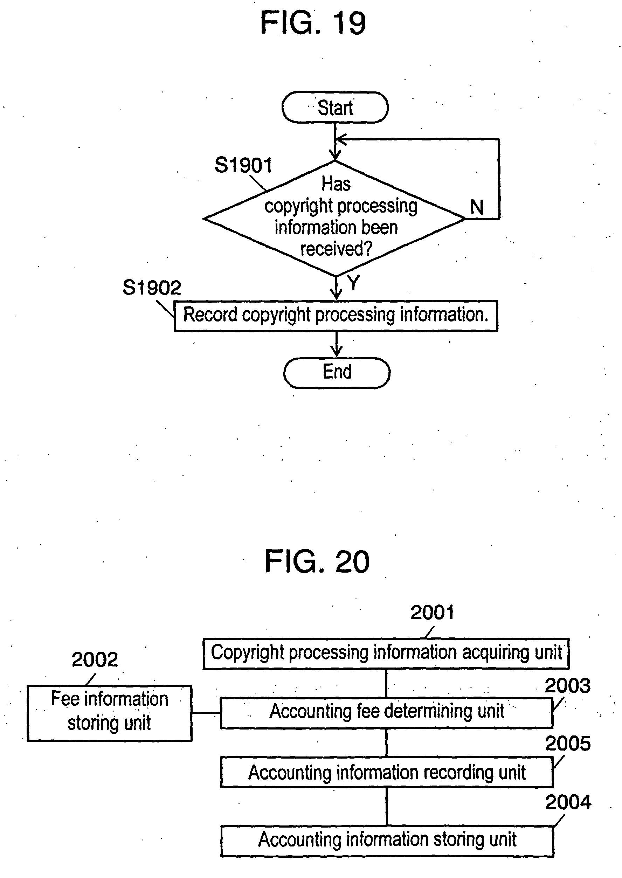

Operations of information processing apparatus 18 for recording copyright processing information on recording medium 182 are described with reference to the flowchart of Fig. 19.
(Step S1901) The information processing apparatus determines whether or not copyright processing information reception unit 1811 has received copyright processing information. If reception unit 1811 has received the copyright processing information, the process goes to step S1902. If reception unit 1811 has not received the copyright processing information, the process returns to step S1901.
(Step S1902) Copyright processing information recording unit 1812 records the received copyright processing information on recording medium 182.

The copyright processing information specifically means information having a configuration shown in Fig. 4, for example. The recording medium on which the copyright processing information is recorded is a rewritable optical disk (e.g. DVD), for example. The copyright processing information is stored in a region called "R-Information area" in the DVD-R (recordable), for example. Here, "R-Information area" is an example into which the copyright processing information is written, and may be the other region. The region into which the copyright processing information is written is preferably a separate region distinguishable from the region into which the content is written. As an example of the separate region, there is a region such as "R-Information area" prepared for the record managing information required for the recording apparatus.

In the present embodiment, copyright processing information can be recorded on the recording medium, and copyright is protected as discussed above.

The operations discussed above (especially, operations described in the flowchart) may be realized by a computer readable program. The program may be delivered in a recorded state on the recording medium such as a CD-ROM, may be delivered by network delivery, or may be delivered in a broadcast.

### (Exemplary embodiment 6)

An information processing apparatus for calculating an accounting fee for recording of copyright processing information in accordance with exemplary embodiment 6 of the present invention is described hereinafter.

Fig. 20 is a block diagram of the information processing apparatus. The information processing apparatus has copyright processing information acquiring unit 2001, fee information storing unit 2002, accounting fee determining unit 2003, accounting information storing unit 2004, and accounting information recording unit 2005.

Copyright processing information acquiring unit 2001 acquires copyright processing information. The copyright processing information may be acquired by transmission of the copyright processing information to the information processing apparatus when the information processing apparatus of embodiment 5 records copyright processing information. Otherwise, the information processing apparatus of embodiment 6 may be integrated with the information processing apparatus of embodiment 5, so that the copyright processing information may be acquired from the copyright processing information reception unit of the information processing apparatus of embodiment 5. Copyright processing information acquiring unit 2001 is generally formed of software, but may be formed of a dedicated electronic circuit.

Fee information storing unit 2002 stores accounting fee information related to the accounting fee. Fee information storing unit 2002 is formed of a recording medium such as a hard disk or a CD-ROM. The storing on fee information storing unit 2002 includes temporary storing on a cache memory or a main memory. The accounting fee information may be acquired from the outside through a communication means, a broadcasting means, a recording medium.

Accounting fee determining unit 2003 determines (creates) accounting information including an accounting fee, and is generally formed of software.

Accounting information storing unit 2004 stores accounting information, and is formed of a recording medium such as a hard disk or a CD-ROM. The storing on accounting information storing unit 2004 includes temporary storing on a cache memory or a main memory.

Accounting information recording unit 2005 records the accounting information determined by accounting fee determining unit 2003 in accounting information storing unit 2004. Accounting information recording unit 2005 is formed of an apparatus for recording the information on the recording medium and its software driver, but may be formed of the apparatus for recording and software having an information recording command.

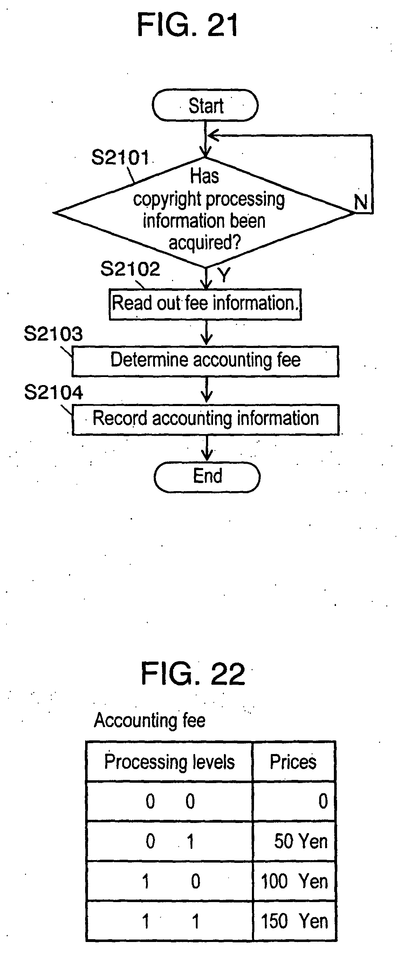

Operations of information processing apparatus 20 for performing accounting processing are described with reference to the flowchart of Fig. 21.
(Step S2101) Information processing apparatus 20 determines whether or not copyright processing information acquiring unit 201 has acquired copyright processing information. If acquiring unit 201 has acquired the information, the process goes to step S2102. If acquiring unit 201 has not acquired the information, the process returns to step S2101.
(Step S2102) Accounting fee determining unit 203 reads out fee information from fee information storing unit 202.
(Step S2103) Accounting fee determining unit 203 determines an accounting fee based on the copyright processing information acquired in step S2101 and the fee information read out in step S2102, and creates accounting information.
(Step S2104) Accounting information recording unit 205 records the accounting information in accounting information storing unit 204.

Next, specific operations of the information processing apparatus are described.

It is assumed that the fee information shown in Fig. 22 is stored in fee information storing unit 202 and the copyright processing information shown in Fig. 4 is acquired by copyright processing information acquiring unit 201. The copyright processing information is specifically 8-bits of information "10100001". In other words, copyright processing judging information is "1", copyright processing level is "01", and copyright processing society identifier is "00001".

In this case, accounting fee determining unit 203 determines to pay "50 yen" to the copyright processing society identified by the copyright processing society identifier "00001" based on the accounting fee information of Fig. 22 and the read copyright processing information. Accounting fee determining unit 203 generates accounting information including "copyright processing society identifier" and "price" shown in Fig, 23.

Accounting information recording unit 205 then records the accounting information "00001" and "50 yen" in accounting information storing unit 204.

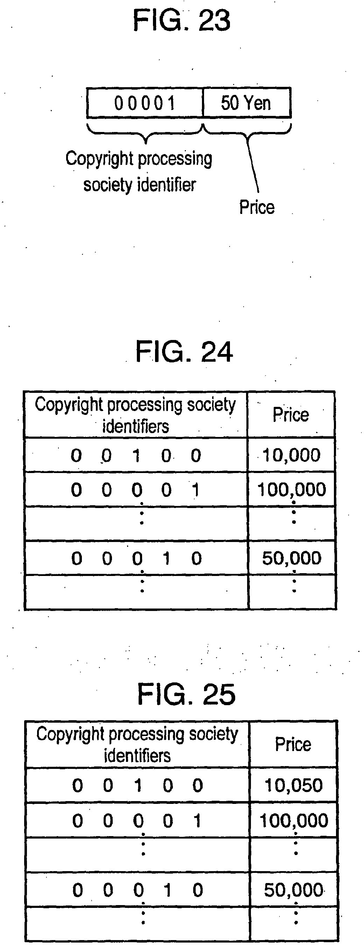

Fig. 24 shows incomes of respective groups identified by the copyright processing society identifiers recorded in accounting information storing unit 204. Each record recorded in accounting information storing unit 204 has attribute values of "copyright processing society identifier" and "price".

Accounting information recording' unit 205, in recording accounting information in accounting information storing unit 204, overwrites each record of "copyright processing society identifier" included in the recorded accounting information with a price derived by adding "price" included in the accounting information. Therefore, when the accounting information stored in storing unit 204 lies in the state of Fig. 24 and the accounting information "00001" and "50 yen" are recorded, the price of the record of the copyright processing society identifier "00001" is changed from "10000" to "10050" as shown in Fig. 25.

In embodiment 6, processing of the accounting fee in recording the copyright processing information on the recording medium has been described. Thanks to this processing, the copyright loyalty can be appropriately collected and the copyright is appropriately protected.

The copyright processing information has the structure shown in Fig. 4 in embodiment 6; however, the present invention is not limited to this structure. For example, copyright processing information may include only copyright processing judging information. In this case, when copyright processing information acquiring unit 201 acquires information of which copyright processing judging information is "1" (namely, copyright processing is performed), accounting fee determining unit 203 determines a certain copyright loyalty (this information is stored in fee information storing unit 202) as the accounting fee, and accounting information recording unit 205 records the accounting fee (accounting information) in accounting information storing unit 204. An appropriate copyright loyalty is paid to a certain copyright group.

Processing of generating the accounting information of embodiment 6 is not limited to the processing discussed above.

Copyright processing information may be acquired at any timing. In other words, the copyright processing information may be acquired periodically or in response to any trigger obtained by the user. Additionally, the copyright processing information may be acquired from the outside when the information processing apparatus determines that the recording medium is not copyright-processed.

The operations discussed above (especially, operations described in the flowchart) may be realized by a computer readable program. The program may be delivered in a recorded state on the recording medium such as a CD-ROM, may be delivered by network delivery, or may be delivered in a broadcast.

### (Exemplary embodiment 7)

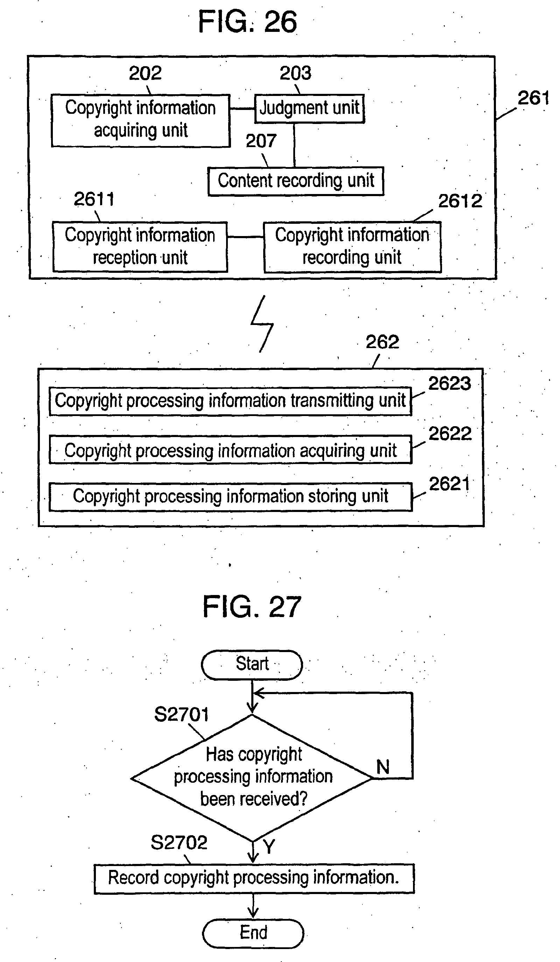

Fig. 26 is a block diagram of an information processing system in accordance with exemplary embodiment 7 of the present invention. The information processing system has information processing apparatus 261 and transmission apparatus 262.

Information processing apparatus 261 is used for recording a content on a recording medium. Information processing apparatus 261 has copyright information acquiring unit 202, judgment unit 203, content recording unit 207, copyright processing information reception unit 2611, and copyright processing information recording unit 2611.

Copyright information acquiring unit 202 acquires copyright processing information related to copyright processing stored on the recording medium. Copyright information acquiring unit 202 is generally formed of software for reading data from the recording medium, but may be formed of a dedicated circuit. Copyright information acquiring unit 202 may be considered to include hardware such as an optical pick of an optical disk recorder or include no hardware.

Judgment unit 203 determines whether or not to record a content based on the copyright processing information.

Content recording unit 207 records a content when judgment unit 203 determines to record it. This content is assumed to be previously stored in the information processing apparatus. This storing also includes temporary storing.

Copyright processing information reception unit 2611 receives copyright processing information related to copyright processing of the recording medium from the outside. Copyright processing information reception unit 2611 receives the copyright processing information by radio, cable network, or broadcast. Therefore, reception unit 2611 can be formed of a modem and its driver software, or a tuner and its driver software.

Copyright processing information recording unit 2612 records copyright processing information on the recording medium. Recording unit 2612 is generally formed of software for recording the information, but may be formed of a dedicated circuit (hardware). Recording unit 2612 may be considered to include hardware of a recording apparatus.

Operations of the information processing apparatus for recording copyright processing information are described with reference to the flowchart of Fig. 27.
(Step S2701) The information processing apparatus determines whether or not copyright processing information reception unit 2611 has received copyright processing information. If reception unit 2611 has received the copyright processing information, the process goes to step S2702. If reception unit 2611 has not received the copyright processing information, the process returns to step S2701.
(Step S2702) Copyright processing information recording unit 2611 records the copyright processing information received by reception unit 2611 on the recording medium.

Operations of the information processing apparatus have been described. A block diagram of the transmission apparatus is described hereinafter with reference to Fig. 26.

Transmission apparatus 262 has copyright processing information storing unit 2621, copyright processing information acquiring unit 2622, and copyright processing information transmitting unit 2623.

Copyright processing information storing unit 2621 stores the copyright processing information that is to be written into the recording medium on the information processing apparatus side. Copyright processing information storing unit 2621 is formed of any medium such as a hard disk or a CD-ROM capable of recording information. Storing unit 2621 may be a temporary recording medium such as a main memory or a cache memory.

Copyright processing information acquiring unit 2622 acquires the copyright processing information stored in copyright processing information storing unit 2621. Acquiring unit 2622 is generally formed of software.

Copyright processing information transmitting unit 2623 transmits the copyright processing information acquired by acquiring unit 2622 to information processing apparatus 261. Transmitting unit 2623 is formed of a modem and its driver software, but may be formed of a broadcasting means. Transmitting unit 2623 may be formed of a communication means regardless of radio or cable communication.

Transmission apparatus 262 may be operated at a manually determined timing or an automatically determined timing. As the automatic determination, an automatic trigger function of an existing operating system (OS) or a trigger function of an active database (DB) is used, for example. When this function is used, transmission apparatus 262 monthly transmits the copyright processing information to information processing apparatus 261.

In embodiment 7, the information processing system can rewrite the copyright processing information. Therefore, the copyright can be protected by a dynamic operation of the system.

The region into which a copyright processing information recording unit records copyright processing information is preferably a predetermined region. The region is preferably a region distinguished from the region into which the content is stored. When the recording medium is a DVD-R, the region used for recording the copyright processing information is a region called "R-Information area", for example.

In embodiment 7, transmission destination identifiers indicating transmission destinations to which copyright processing information is transmitted and copyright processing information may be managed in pairs in copyright processing information storing unit 2621 of transmission apparatus 262. In this case, different copyright processing information can be recorded for each apparatus. When the copyright processing information is monthly updated in this manner, copyright can be further protected. In other words, the copyright can be further protected, for example, when copyright processing information is periodically updated in a predetermined recording medium possessed by a user who has paid with an alternative means (not shown), but copyright processing information is not updated (or copyright processing information stored in the recording medium is eliminated) in the recording medium possessed by a user who has not paid.

Judgment unit 203 determines only whether or not to record a content based on presence or absence of the copyright processing information in embodiment 7. However, copyright may be protected by recording an encrypted content or only part of a content based on presence or absence of the copyright processing information or descriptions of the copyright processing information. In the latter case, the information processing apparatus has the following elements:
a copyright processing information acquiring unit for acquiring copyright processing information related to copyright processing recorded on the recording medium;
a content recording unit for recording a content based on the copyright processing information;
a copyright processing information reception unit for receiving the copyright processing information related to the copyright processing of the recording medium from the outside; and
a copyright processing information recording unit for recording the copyright processing information on the recording medium.

The operations discussed above (especially, operations described in the flowchart) may be realized by a computer readable program. The program may be delivered in a recorded state on the recording medium such as a CD-ROM, may be delivered by network delivery, or may be delivered in a broadcast.

### (Exemplary embodiment 8)

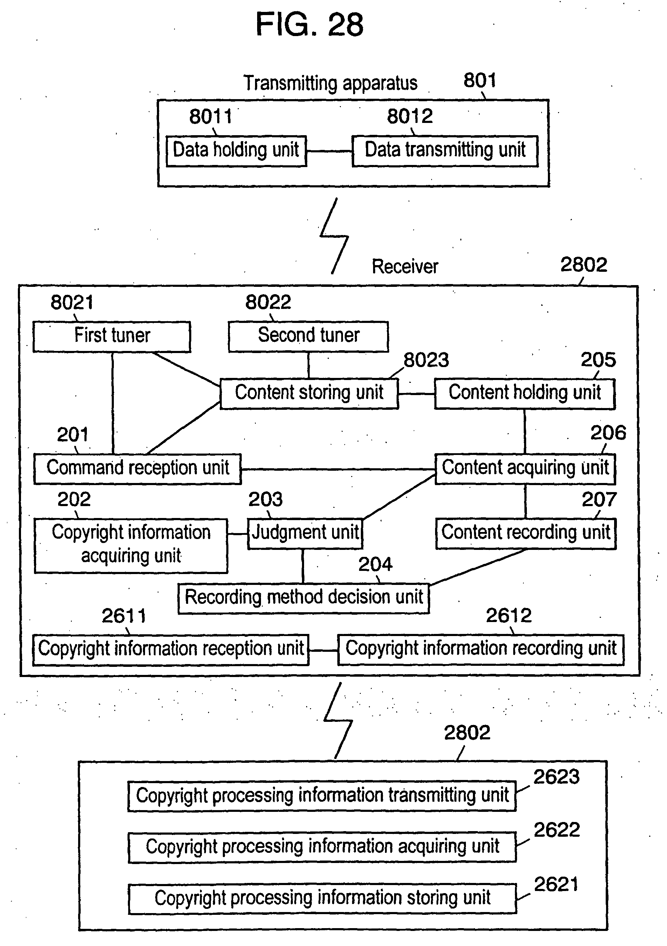

Fig. 28 is a block diagram of a transmitting/receiving system in accordance with exemplary embodiment 8 of the present invention. The transmitting/receiving system has transmission apparatus 801, receiver 2801, and server apparatus 2802. Here, the transmission may be one-to-many data transmission such as a broadcast, or may be one-to-one data transmission using a network.

Receiver 2801 has first tuner 8021, second tuner 8022, content storing unit 8023, command reception unit 201, copyright information acquiring unit 202, judgment unit 203, recording method decision unit 204, content holding unit 205, content acquiring unit 206, content recording unit 207, copyright processing information reception unit 2611, and copyright processing information recording unit 2611.

Server apparatus 2802 has a configuration similar to that of transmission apparatus 262 of embodiment 7, and has copyright processing information storing unit 2621, copyright processing information acquiring unit 2622, and copyright processing information transmitting unit 2623.

In the configuration discussed above, copyright processing information reception unit 2611 of information processing apparatus 2801 receives copyright processing information transmitted from transmitting unit 2623 of server apparatus 2802, and copyright processing information recording unit 2611 records the copyright processing information on a recording medium. This recording processing is similar to that in embodiment 7, so that detailed description is omitted.

Here, the recording medium used for recording the copyright processing information may be any medium capable of recording information, but a mass storage hard disk is preferable because a television is assumed in the present embodiment.

The region into which the copyright processing information recording unit records copyright processing information is preferably a predetermined region. The region is preferably a region distinguished from the region into which the content is stored. When the recording medium is a DVD-R, the region used for recording the copyright processing information is a region called "R-Information area", for example.

When the recording medium is a hard disk, for example, the hard disk is partitioned, a certain partitioned region is used for recording the copyright processing information, and is preferably distinguished from a region used for storing contents: When the recording medium is a hard disk, as another example, a certain folder or a certain file is predetermined as a folder or file used for recording the copyright processing information, and, preferably, a general user is not permitted to access the folder or file or is not permitted to watch it.

In embodiment 8, transmission destination identifiers indicating transmission destinations to which copyright processing information is transmitted and copyright processing information may be managed in pairs in copyright processing information storing unit 2621 of server apparatus 2802. In this case, different copyright processing information can be recorded for each apparatus. When the copyright processing information is monthly updated in this manner, copyright can be further protected. In other words, copyright can be further protected, for example, when copyright processing information is periodically updated in a predetermined recording medium possessed by a user who has paid with an alternative means (not shown), but copyright processing information is not updated (or copyright processing information stored in the recording medium is eliminated) in the recording medium possessed by a user who has not paid.

In embodiment 8, the receiver records a broadcasting content of a digital television or the like. Copyright processing information is recorded on a recording medium included in the receiver or connected to the receiver. Thus, copyright can be protected in a dynamic system operation.

In embodiment 8, instead of designation of server apparatus 2802, designation of transmission apparatus may be used. The reason why designation of server apparatus 2802 has been used is because transmission apparatus 801 exists in the system of embodiment 8.

Copyright processing information reception unit 2611 may be a communication means or a broadcasting means, but is preferably the communication means. That is because copyright processing information is generally, individually communicated.

The receiver of embodiment 8 records a content on the recording medium in accordance with the recording method determined by the recording method decision unit. This recording method, discussed above, has manners such as recording/non-recording, recording the entire content as it is / encrypting and recording, or recording the entire content / recording the content partially. Therefore, the receiver of embodiment 8 (instead of the designation of the receiver, the designation of the information processing apparatus may be used) can be considered to have the following configuration. The information processing apparatus (receiver) has the following elements:
a reception unit for receiving a content;
a copyright processing information acquiring unit for acquiring copyright processing information stored on a recording medium;
a content recording unit for recording a content based on the copyright processing information;
a copyright processing information reception unit for receiving the copyright processing information related to the copyright processing of the recording medium from the outside; and
a copyright processing information recording unit for recording the copyright processing information on the recording medium.

The operations discussed above (especially, operations described in the flowchart) may be realized by a computer readable program. The program may be delivered in a recorded state on the recording medium such as a CD-ROM, may be delivered by network delivery, or may be delivered in a broadcast.

### (Exemplary embodiment 9)

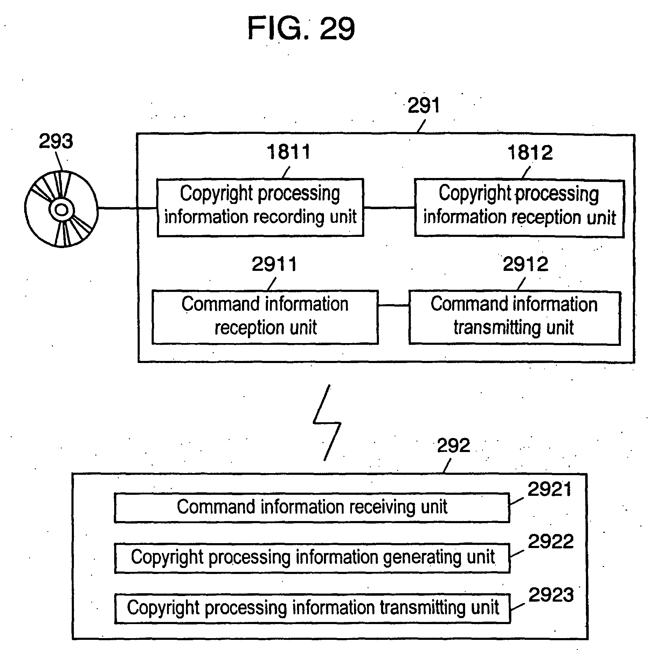

Fig. 29 is a block diagram of a configuration of an information processing system in accordance with exemplary embodiment 9 of the present invention. The information processing system has information processing apparatus 291, transmission apparatus 292, and recording medium 293.

Information processing apparatus 291 has copyright processing information reception unit 1811, copyright processing information recording unit 1812, command information reception unit 2911, and command information transmitting unit 2912.

Command information reception unit 2911 receives command information including information related to a rewriting command or a recording command of copyright processing information. Reception unit 2911 is formed of a keyboard and its software driver, for example. When a user is encouraged to input the command information using a panel or a menu, a display program of the panel information or driver software of a mouse can become a realizing means of reception unit 2911.

Command information transmitting unit 2912 transmits the command information to the outside. This outside generally means transmission apparatus 292, but may mean a relay device or the like. It is simply required that the command information arrives at transmission apparatus 292 indirectly or manually. Transmitting unit 2912 is generally formed of radio or cable communication means, for example a modem and its driver software. Transmitting unit 2912 may be a broadcasting means.

Copyright processing information reception unit 1811 receives copyright processing information from transmission apparatus 292. Here, the copyright processing information is information that has been transmitted from transmission apparatus 292 based on the command information.

Transmission apparatus 292 has command information receiving unit 2921, copyright processing information generating unit 2922, copyright processing information transmitting unit 2923.

Command information receiving unit 2921 receives command information transmitted by command information transmitting unit 2912. Receiving unit 2921 is generally formed of radio or cable communication means, but may be formed of a broadcasting'means such as a tuner and its driver software.

Copyright processing information generating unit 2922 generates copyright processing information based on the command information received by receiving unit 2921. Generating unit 2922 is generally formed of software, but may be formed of a dedicated circuit (hardware). Some generating methods of copyright processing information in generating unit 2922 are considered, and the detailed description will be presented later.

Copyright processing information transmitting unit 2923 transmits the copyright processing information generated by generating unit 2922 to information processing apparatus 291. Transmitting unit 2923 is generally formed of radio or cable communication means, but may be formed of a broadcasting means.

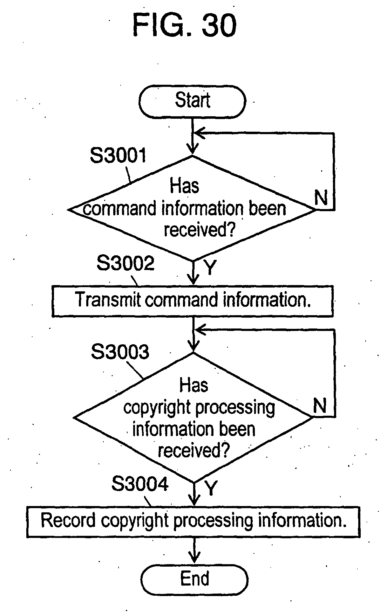

Operations of information processing apparatus 291 for receiving and transmitting command information are described with reference to the flowchart of Fig. 30.
(Step S3001) Information processing apparatus 291 determines whether or not command information reception unit 2911 has received command information. If reception unit 2911 has received the command information, the process goes to step S3002. If reception unit 2911 has not received the command information, the process returns to step S3001.
(Step S3002) Command information transmitting unit 2912 transmits the command information received in step S3001 to transmission apparatus 292.
(Step S3003) Information processing apparatus 291 determines whether or not copyright processing information reception unit 1811 has received copyright processing information. If reception unit 1811 has received the copyright processing information, the process goes to step S3004 If reception unit 1811 has not received the copyright processing information, the process returns to step S3003.
(Step S3004) Copyright processing information recording unit 1812 records the copyright processing information received in step S3003 on recording medium 293.

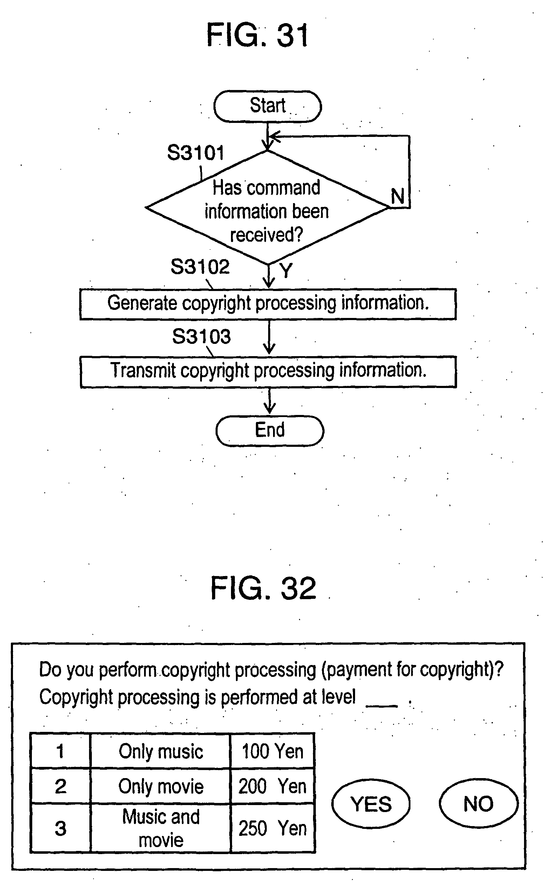

Operations of transmission apparatus 292 for receiving command information and transmitting copyright processing information are described with reference to Fig. 31.
(Step S311) Transmission apparatus 292 determines whether or not command information receiving unit 2921 has received command information. If receiving unit 2921 has received the command information, the process goes to step S312. If receiving unit 2921 has not received the command information, the process returns to step S311.
(Step S312) Copyright processing information generating unit 2922 generates copyright processing information based on the command information received in step S311.
(Step S313) Copyright processing information transmitting unit 2923 transmits the copyright processing information generated in step S312 to information processing apparatus 291.

Specific operations of the information processing system are hereinafter described. The panel shown in Fig. 32 is displayed by information processing apparatus 291 and encourages a user to input command information.

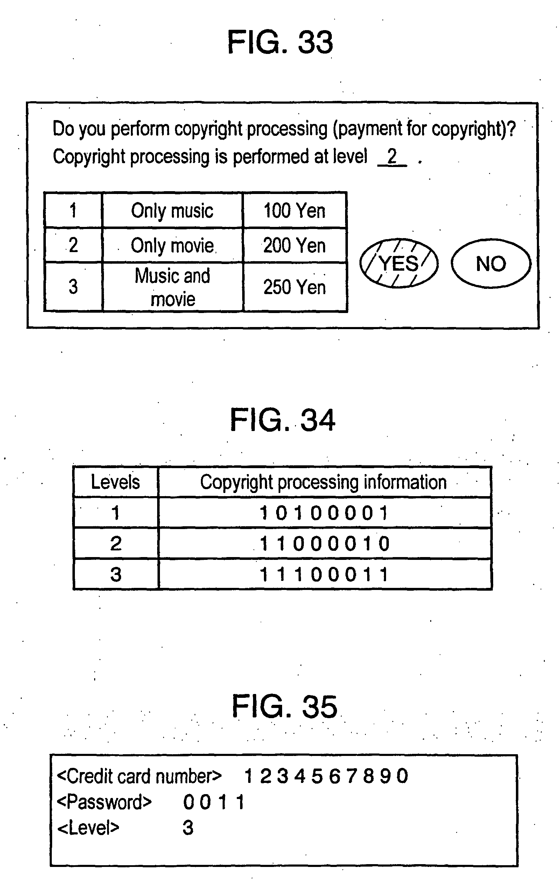

When a user inputs "2" into the field into which a level is input (a recording medium on which only a movie can be recorded is generated) and pushes the "YES" button, as shown in Fig. 33, command information "2" is transmitted from information processing apparatus 291 to transmission apparatus 292.

Transmission apparatus 292, on receiving the information "2", generates copyright processing information based on the command information "2". Specifically, the copyright processing information is generated by the following processing, for example. Transmission apparatus 292 has the corresponding table between "level" and copyright processing information shown in Fig. 34, and retrieves copyright processing information using "level" as a key. The level is now "2", so that copyright processing information "11000010" in the second record of Fig. 34 is acquired. The indication of the copyright processing information "11000010" is similar to that described with reference to Fig. 4. The generation of the copyright processing information means a retrieving processing of the copyright processing information, but may mean the other processing. The "2" of the level equals to "10" in binary, so that the sum "110" of "100" and "10" may be set as the copyright processing information. In this case, the copyright processing information is formed only of copyright processing judging information and copyright processing level information. In other words, the third bit indicates the copyright processing judging information, and the last two bits indicate the copyright processing level information.

The generation of the copyright processing information may be creating processing of information of only "1" at any of level "1", level "2", and level "3". In this case, the copyright processing information is formed of only copyright processing judging information, and "1" indicates that the copyright processing has been performed.

The generated copyright processing information is transmitted from transmission apparatus 292 to information processing apparatus 291. Information processing apparatus 291, on receiving the copyright processing information, records the copyright processing information on a recording medium.

The region into which the copyright processing information is recorded is preferably a predetermined region. The region is preferably a region distinguished from the region into which the content is stored. When the recording medium is a DVD-R, the region used for recording the copyright processing information is a region called "R-Information area", for example.

In embodiment 9, copyright processing information can be recorded based on a user command, and copyright is appropriately protected.

Command information of embodiment 9 may include identifying information used for identifying a transmitting person. The identifying information includes a credit card number and a password used for payment processing, for example. In this case, transmission apparatus 292 has an individual certifying unit for certifying an individual based on the identifying information. The copyright processing information transmitting unit transmits or does not transmit copyright processing information in response to the result of the individual certification.

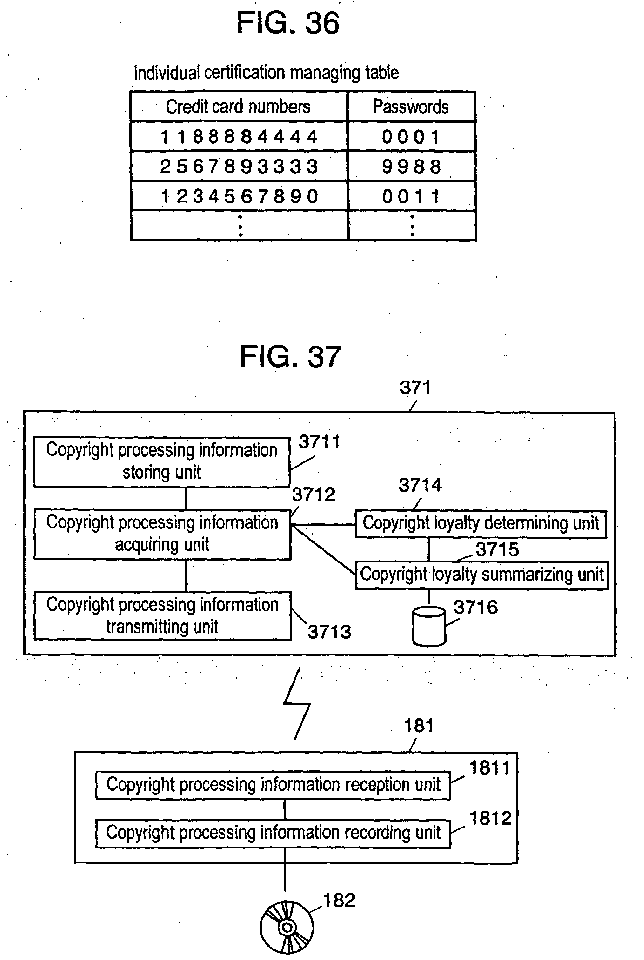

Specifically, the command information having the credit card number, password, and level (copyright processing level) shown in Fig. 35 is transmitted from information processing apparatus 291 to the transmission apparatus. The individual certification managing table used for individual certification shown in Fig. 36 is previously stored in the individual certifying unit. The individual certifying unit confirms whether or not the received credit card number and password are stored in the individual certification managing table. If they are stored, the individual certifying unit generates and transmits copyright processing information. The processing of confirming whether or not the received credit card number and password are stored in the individual certification managing table may be performed at an arbitrary timing. In other words, it presents no problem whether the processing is performed before the generation of the copyright processing information or after the generation.

The command information is not limited to the information discussed above, but may be information indicating "price". "Price" information indicates an amount to be paid by a user for copyright. In this case, the copyright processing level is determined based on the price.

The recording processing of the copyright processing information on the recording medium is performed by improving the information processing apparatus of embodiment 5. However, the recording processing may be surely applied to the configurations of the other embodiments (embodiments 6 to 8).

Information processing apparatus 291 has copyright processing information reception unit 1811, copyright processing information recording unit 1812, command information reception unit 2911, and command information transmitting unit 2912 in embodiment 9. However, command information reception unit 2911 and command information transmitting unit 2912 may be separated from copyright processing information reception unit 1811 and copyright processing information recording unit 1812. For example, the following system configuration is considered. An information processing apparatus having reception unit 2911 and transmitting unit 2912 is formed and transmits command information to a transmission apparatus, and the transmission apparatus transmits copyright processing information to reception unit 1811 and recording unit 1812. In this case, the information processing apparatus having reception unit 2911 and transmitting unit 2912 is a communication apparatus having a mobile phone function, for example.

The operations discussed above (especially, operations described in the flowchart) may be realized by a computer readable program. The program may be delivered in a recorded state on the recording medium such as a CD-ROM, may be delivered by network delivery, or may be delivered in a broadcast.

### (Exemplary embodiment 10)

Fig. 37 is a block diagram of a configuration of an information processing system in accordance with exemplary embodiment 10 of the present invention. The information processing system has transmission apparatus 371, information processing apparatus 181, and recording medium 182.

Transmission apparatus 371 has copyright processing information storing unit 3711, copyright processing information acquiring unit 3712, copyright processing information transmitting unit 3713, copyright loyalty determining unit 3714, copyright loyalty summarizing unit 3715, and copyright loyalty storing unit 3716.

Copyright processing information storing unit 3711 stores copyright processing information. Storing unit 3711 may be any medium capable of storing the information, for example a hard disk or a semiconductor memory.

Copyright processing information acquiring unit 3712 acquires the copyright processing information stored in storing unit 3711. Storing unit 3711 is generally formed of software.

Copyright processing information transmitting unit 3713 transmits the copyright processing information acquired by acquiring unit 3712. Transmitting unit 3713 is formed of a radio or cable communication means, but may be formed of a broadcasting means.

Copyright loyalty determining unit 3714 determines copyright loyalty based on the copyright processing information transmitted by transmitting unit 3713. The determination of the copyright loyalty by copyright loyalty determining unit 3714 may be performed at either timing, namely before or after the transmission of the copyright processing information by transmitting unit 3713. Determining unit 3714 is generally formed of software, but may be formed of a dedicated circuit (hardware).

Various determining methods of the copyright loyalty by copyright loyalty determining unit 3714 are considered. For example, different copyright loyalty is determined based on copyright processing level information, or uniform copyright loyalty is determined.

Copyright loyalty summarizing unit 3715 summarizes the copyright loyalty determined by determining unit 3714 every copyright processing society identifier. The copyright processing society identifier is assumed to be included in copyright processing information. The summarization result data is stored in copyright loyalty storing unit 3716. Copyright loyalty summarizing unit 3715 is generally formed of software, but may be formed of a dedicated circuit (hardware).

Copyright loyalty storing unit 3716 stores information of the summarization result of summarizing unit 3715. Storing unit 3716 may be any medium such as a hard disk capable of recording the information.

Information processing apparatus 181 has copyright processing information reception unit 1811 and copyright processing information recording unit 1812.

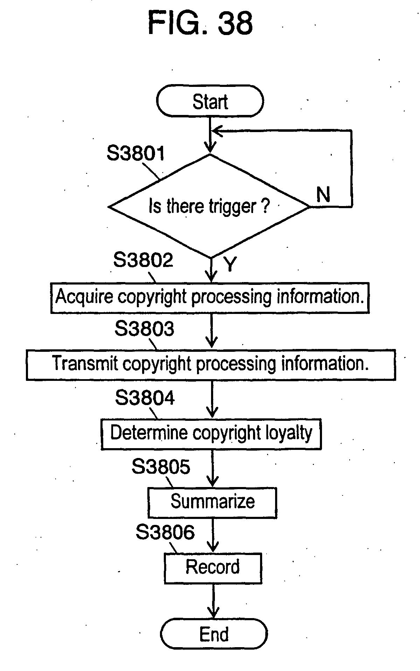

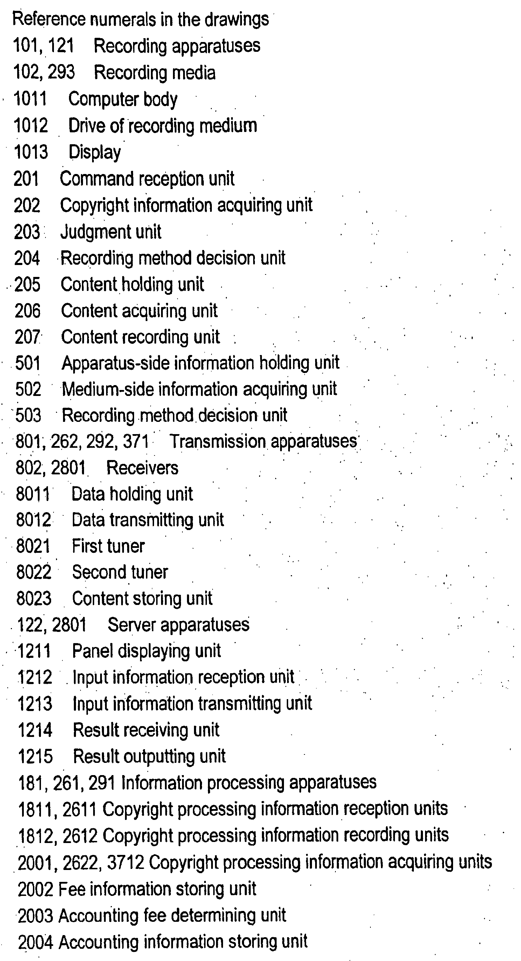

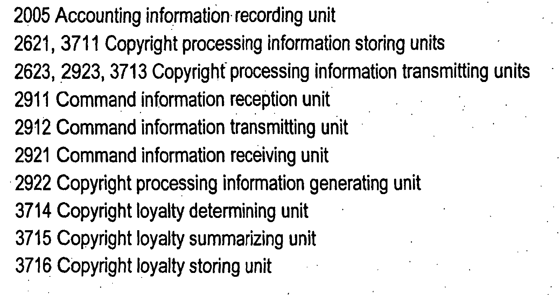

Operations of transmission apparatus 371 for transmitting copyright processing information and determining a copyright loyalty are described with reference to the flowchart of Fig. 38.
(Step S3801) Copyright processing information acquiring unit 3712 determines whether or not there is a trigger for transmitting copyright processing information. If there is the trigger, the process goes to step S3802. If there is not the trigger, the process returns to step S3801.
(Step S3802) Acquiring unit 3712 acquires the copyright processing information stored in copyright processing information storing unit 3711.
(Step S3803) Copyright processing information transmitting unit 3713 transmits the copyright processing information acquired in step S3802.
(Step S3804) Copyright loyalty determining unit 3714 determines a copyright loyalty based on the copyright processing information transmitted by copyright processing information transmitting unit 3713. Here, the determination of the copyright loyalty based on the transmitted copyright processing information is equivalent to the determination of the copyright loyalty based on the copyright processing information acquired in step S3802. In Fig. 37, determining unit 3714 acquires the copyright processing information from acquiring unit 3712.
(Step S3805) Copyright loyalty summarizing unit 3715 summarizes the copyright loyalty determined by determining unit 3714 every copyright processing society identifier.
(Step S3806) Copyright loyalty summarizing unit 3715 records the summarized information in copyright loyalty storing unit 3716.

The processing of receiving the copyright processing information and recording it on recording medium 182 by information processing apparatus 181 has been described, the description of the processing is omitted.

Specific operations of copyright loyalty determination by transmission apparatus 37 are described hereinafter. It is now assumed that a table (shown in Fig. 24) having a plurality of records having "copyright processing society identifier" and "price" in pairs is stored in copyright loyalty storing unit 3716. This "price" indicates a copyright loyalty paid to the copyright processing society that is identified by the "copyright processing society identifier" corresponding to the attribute value of the "price". A table (shown in Fig. 22) having a plurality of records having "processing level" and "price" in pairs is assumed to be stored in copyright loyalty determining unit 3714.

Copyright processing information having processing level "11" and copyright processing society identifier "00100" is assumed to be stored in copyright processing information storing unit 3711.

In this case, copyright processing information acquiring unit 3712 acquires copyright processing information, and copyright processing information transmitting unit 3713 transmits the information.

Copyright loyalty determining unit 3714 determines a copyright loyalty based on the copyright processing information having processing level "11" and copyright processing society identifier "00100". The processing level is "11", so that the price is determined to be "150 yen" based on the table of Fig. 22.

Copyright loyalty summarizing unit 3715 acquires "price" information corresponding to copyright processing society identifier "00100" included in the copyright processing information based on the table of Fig. 24. The acquired "price" is "50,000". Copyright loyalty summarizing unit 3715 adds the acquired price "50,000" to the price "150 yen" determined by copyright loyalty determining unit 3714 to derive "50,150". Copyright loyalty summarizing unit 3715 records the "50,150" as an attribute value of "price" of the record having copyright processing society identifier "00100".

The processing of calculating a copyright loyalty based on the transmitted copyright processing information and the processing of summarizing the copyright loyalty every copyright processing society identifier in embodiment 10 have been described. In these processings, the copyright loyalty can be appropriately collected, and the collected copyright loyalty can be fairly delivered to a suitable group.

A different copyright loyalty is determined based on copyright processing level information included in the copyright processing information in embodiment 10; however, a uniform copyright loyalty may be determined. The copyright loyalty is determined based on the corresponding table between levels and prices in embodiment 10; however, the copyright loyalty may be determined based on some arithmetic expression.

The copyright loyalty is summarized every copyright processing society identifier in embodiment 10; however, the summarizing method is not limited to this. The whole copyright loyalty may be calculated, when the copyright processing information includes no copyright processing society identifier, for example.

The copyright loyalty determining unit and the copyright loyalty summarizing unit of the transmission apparatus of embodiment 10 may be separated from each other. In other words, the copyright loyalty summarizing unit is not absolutely required.

The operations discussed above (especially, operations described in the flowchart) may be realized by a computer readable program. The program may be delivered in a recorded state on the recording medium such as a CD-ROM, may be delivered by network delivery, or may be delivered in a broadcast.

As discussed above, the information processing system of the present invention can record copyright processing information on a recording medium from the inside or the outside. The copyright is appropriately protected by determining a recording method or the like of a content based on the copyright processing information recorded on the recording medium.

### INDUSTRIAL APPLICABILITY

The present invention relates to an information processing apparatus for recording information for copyright protection on a recording medium, and the recording medium or the like. The information processing apparatus acquires copyright processing information related to copyright processing recorded on the recording medium, and performs recording processing so as to determine whether or not to record a content based on the copyright processing information. Thus, a copyright loyalty can be charged to the recording medium, and the copyright is appropriately protected.

## Claims

1. An information processing apparatus for recording data on a recording medium, comprising:
a copyright processing information reception unit for receiving copyright processing information related to copyright processing of the recording medium; and
a copyright processing information recording unit for recording the copyright processing information on the recording medium.

2. An information processing apparatus 'for recording a content on a recording medium, comprising:
a content holding unit for holding the content;
a copyright processing information acquiring unit for acquiring copyright processing information related to copyright processing recorded on the recording medium;
a content recording unit for recording the content held by the content holding unit based on the copyright processing information;
a copyright processing information reception unit for receiving copyright processing information. related to copyright processing of the recording medium from an outside; and
a copyright processing information recording unit for recording the copyright processing information on the recording medium.

3. An information processing apparatus for recording a content on a recording medium comprising:
a receiving unit for receiving the content;
a copyright processing information acquiring unit for acquiring copyright processing information recorded on the recording medium;
a content recording unit for recording the content based on the copyright processing information;
a copyright processing information reception unit for receiving copyright processing information related to copyright processing of the recording medium from an outside; and
a copyright processing information recording unit for recording the copyright processing information on the recording medium.

4. An information processing apparatus according to claim 3, wherein
the copyright processing information reception unit receives the copyright processing information in communications, and
the recording medium is a hard disk.

5. An information processing apparatus according to one of claim 1 to claim 4, wherein
the copyright processing information recording unit records the copyright processing information in a predetermined region.

6. An information processing apparatus according to one of claim 1 to claim 3 and claim 5, wherein
the recording medium is an optical disk, and
the copyright processing information is recorded in a region distinguished from a region used for storing the content.

7. An information processing apparatus according to one of claim 1 to claim 6, further comprising:
a command information reception unit for receiving command information including information related to a rewriting command or a recording command of the copyright processing information; and
a command information transmitting unit for transmitting the command information,
wherein the copyright processing information received by the copyright processing information reception unit is information transmitted from the outside based on the transmitted command information.

8. An information processing apparatus according to one of claim 1 to claim 7, further comprising a copyright loyalty determining unit.

9. A transmission apparatus for transmitting copyright processing information to an information processing apparatus according to one of claim 1 to claim 8.

10. A transmission apparatus for transmitting copyright processing information to an information processing apparatus according to claim 7, the transmission apparatus comprising:
a command information reception unit for receiving command information;
a copyright processing information generating unit for generating copyright processing information based on the command information received by the command information reception unit; and
a copyright processing information transmitting unit for transmitting the copyright processing information generated by the copyright processing information generating unit.

11. A transmission apparatus according to claim 9, wherein
the command information includes identifying information used for identifying a transmitting person who has transmitted the command information,
the transmission apparatus has an individual certifying unit for certifying an individual based on the identifying information, and
the transmitting apparatus transmits or does not transmit copyright processing information in response to a certification result of the individual certifying unit.

12. A transmission apparatus according to claim 11, further comprising a copyright loyalty determining unit for determining a copyright loyalty based on the transmitted copyright processing information.

13. A transmission apparatus according to claim 12, wherein
the copyright processing information includes copyright processing level information, and
the copyright loyalty determining unit determines a different copyright loyalty based on the copyright processing level information.

14. A transmission apparatus according to claim 13, wherein
the copyright processing information includes copyright processing society identifiers, and
the transmission apparatus further comprises a copyright loyalty summarizing unit for summarizing the copyright loyalty determined by the copyright loyalty determining unit every copyright processing society identifier.

15. A copyright loyalty determining method comprising a step of determining a copyright loyalty based on copyright processing information transmitted by a transmission apparatus according to claim 8.

16. A copyright loyalty determining method according to claim 15, wherein
the copyright processing information includes copyright 'processing level information, and
in the copyright loyalty determining step, a different copyright loyalty is determined based on the copyright processing level information.

17. A copyright loyalty determining method according to claim 15 or claim 16, wherein
the copyright processing information includes copyright processing society identifiers, and
the copyright loyalty determining method further comprises a step of summarizing the copyright loyalty determined in the copyright loyalty determining step every copyright processing society identifier.

18. A recording medium on which an information processing apparatus according to one of claim 1 to claim 7 records copyright processing information.

19. An information processing apparatus comprising:
a command information reception unit for receiving command information including information related to a rewriting command or a recording command of the copyright processing information; and
a command information transmitting unit for transmitting the command information.

20. A program for making a computer execute the steps of:
receiving copyright processing information related to copyright processing of a recording medium; and
recording the copyright processing information on the recording medium.

21. A program for making a computer execute the steps of:
acquiring copyright processing information recorded on a recording medium;
recording a content based on the copyright processing information;
receiving copyright processing information related to copyright processing of the recording medium from an outside; and
recording the copyright processing information on the recording medium.

22. A program for making a computer execute the steps of:
receiving a content;
acquiring copyright processing information recorded on a recording medium;
recording the content based on the copyright processing information;
receiving copyright processing information related to copyright processing of the recording medium from an outside; and
recording the copyright processing information on the recording medium.
